# EUROPEAN PATENT SPECIFICATION

(11) **EP 1 781 717 B1**
(45) Date of publication and mention of the grant of the patent: **07.11.2012**
(21) Application number: 04763167.6
(22) Date of filing: 10.07.2004
(51) Int. Cl.: C08F 20/00

(54) **COPOLYMER-CONTAINING CLEANING COMPOSITIONS**
COPOLYMERHALTIGE REINIGUNGSMITTEL
COMPOSITIONS DE NETTOYAGE CONTENANT DES COPOLYMERES

(43) Date of publication of application: 09.05.2007
(73) Proprietor: Henkel AG & Co. KGaA, 40589 Düsseldorf (DE); Lion Corporation, Tokyo 130-0004 (JP)
(72) Inventor: KOMATSU, Masanori, Sinagawa-ku, Tokyo (JP); MARUYAMA, Takanobu, Atsugi-shi, Kanagawa (JP); KABASHIMA, Shin-ichiro, Koganei-shi, Tokyo (JP); DAHLMANN, Doris, 40589 Düsseldorf (DE); FREY, Stefan, 67146 Deidesheim (DE); DREJA, Michael, 50931 Köln (DE); HATTEMER, Erik, 40597 Düsseldorf (DE); ZIGANKE, Kerstin, 40595 Düsseldorf (DE)
(74) Representative: Mundt, Linda
(86) International application number: PCT/EP2004/007645
(87) International publication number: WO 2006/005358

(56) References cited:
- US-A1- 2003 022 987
- US-A1- 2003 232 028
- XP002318451 Retrieved from the Internet: URL:www.nalco.com/pdf/cosmetics/PolyQ39.pd f>
- XP002318452 Retrieved from the Internet: URL:www.chemicalland21.com/arokorhi/indust rialchem/organic/ACRYLAMIDE.htm>

## Description

This invention relates to a copolymer being highly effective in hard surface cleaning, its use as an anti-soiling agent and surface-treating agent and a cleaning composition containing one or more of said copolymers and a method of making said copolymers.

### Background of the Invention

Recently, many kinds of household cleaners for hard surfaces have been launched. The hard surfaces as herein defined are surfaces of ceramics, glass, metal and plastics, etc. However accumulated soils, like aged oil and proteins, are sometimes hardly removed from such surfaces by just using a surfactant solution. Especially faeces are liable to stick on a toilet bowl surface and the adherent faeces are hardly washed off by water flush without mechanical force. Thus, in order to prevent adhesion and accumulation of soils on the hard surfaces, techniques of surface modification have been developed to provide easy cleaning.

Several anti-soiling compositions as surface treating agents, that change hydrophobic surfaces to become hydrophilic due to the formation of a water layer on the treated surface, and therefore, lipophilic soil does not adhere on the treated surface, are known. However, the anti-soil effects of hydrophilic surfaces formed by those compositions are too weak to prevent adhesion of sticky soils like faeces.

Other toilet cleaner compositions consisting of soluble surfactants as ingredients depress the accumulation of faeces by the effect of the surfactant. However, as cleaner compositions consisting of soluble surfactants as ingredients, the cleaners exhibits no durability of the anti-soiling effect.

Further toilet cleaner compositions like described in WO 0234815 A2 contain fluorinated polymers. However, when such composition is used on a hard surface, the surface becomes hydrophobic and, therefore, water droplets tend to remain on the surface and form spots of inorganic soil on the surface after drying. As the result, faeces tend to adhere to the inorganic soils. Thus the anti-soiling effect of such compositions is not sufficient for the purpose.

EP 1 362 907 describes hard surface cleaning compositions comprising polymers, which are obtained by polymerisation of positively, negatively and uncharged monomers.

US 2003-0203826 A1 and US 6593288 B1 disclose the use of hard surface treatment polymers comprising two mandatory monomers, one of which is a monomer containing a quaternary nitrogen and two ethylenically unsaturated groups, the other mandatory monomer being a hydrophilic acidic monomer.

DE 10141006 A1 discloses amphoteric polymers as anti-soil agents comprising two mandatory monomers, one of which is a carboxylic acid monomer, the other one being a cationic monomer.

DE 100 62 355 A1 discloses ampholytic, amphiphilic copolymers for surface-treatment built from cationic, anionic and water-insoluble hydrophobic monomers, which are suitable to provide hard surfaces with an anti-soil effect.

As described above, sufficient anti-soil effect for faeces is not obtained in the prior art.

### Summary of the Invention

An objective of the present invention is to provide highly effective copolymers suitable as components in surface-treating agents and compositions, in particular being useful for hard surface cleaning and thereby to overcome the drawbacks of the above prior art. Further provided are cleaning compositions containing such copolymers. Those cleaning compositions are in particular useful for treating hard surfaces, especially ceramic surfaces, to provide those surfaces with a high anti-soil effect, especially for faeces. Preferably those compositions show an enhanced durability of the effect compared to the state of the art compounds.

After intensive investigations made for the purpose of solving the problems described above, the inventors have solved the problems by employing a copolymer copolymerised of at least three ethylenically unsaturated monomers.

In a first embodiment of the invention a copolymer, which is obtainable by copolymerisation of the following amounts of ethylenically unsaturated monomers: 5 to 99 weight-% of one or more anionic vinyl monomers (A); 0.01 to 50 weight-% of one or more vinyl monomers (B) comprising a quaternary ammonium group or tertiary amino group; optionally 0.5 to 80 weight-% of one or more nonionic hydrophilic vinyl monomers (C); 0.1 to 15 weight-% of one or more polyfunctional vinyl monomers (F) of the general formula (9), 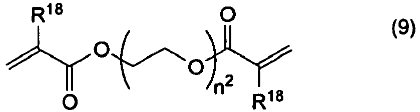 wherein R¹⁸ represents a hydrogen or an alkyl group having 1 or 2 carbon atoms and n² represents a number of 1 to 20; 0 to 30 weight-% of one or more hydrophobic vinyl monomers (D); and 0 to 20 weight-% of one or more vinyl monomers (E) containing silicone moieties, wherein the sum of the monomers (A), (B), (C), (D), (E) and (F) is 100 weight-%, is provided.

In a second embodiment the invention provides the use of the copolymers of the invention as surface-treating agent and anti-soiling agent.

In a third embodiment this invention also provides a composition containing the copolymer of the invention, which is in particular useful for hard surface cleaning of sanitary ware, but not limited thereto.

In yet another embodiment a method of making the copolymers of the invention is provided.

### Detailed Description

### Copolymers of the invention

The copolymers of the invention are obtainable by any common polymerisation method that may be applied for polymerising ethylenically unsaturated monomers. For example methods like solution polymerisation, bulk polymerisation and other polymerisation methods know to the one skilled in the art of macromolecular chemistry are employable to obtain the copolymers. Generally the polymerisation is carried out at a temperature ranging from about 30 °C to about 110 °C, in the presence of photoinitiators. The reaction medium is preferably a hydrophilic solvent, e.g. like water or a mixture of water with one or more hydrophilic solvents. The reaction is preferably carried out under an inert gas atmosphere, like nitrogen. Preferable number average molecular weights of the copolymers of the invention range from about 10,000 to about 1,000,000 g/mol, more preferably 40,000 to 300,000 g/mol. In general the copolymers are apt to preferably provide hard surfaces with a hydrophilic, preferably negatively charged coating. Furthermore the copolymers of the invention are also apt to provide hard ceramic surfaces with an excellent glossy appearance. Preferably used copolymers of the invention provide surfaces with a surface energy of more than 50 mN/m, in particular more than 75 mN/m and show contact angles regarding water of less than 30°, in particular less than 10°, and contact angles regarding diiodomethane of less than 40°, in particular less than 20°.

In the following the monomers (A), (B), (C), (D), (E) and (F) which are employable in the polymerisation reaction are presented in more detail. Nevertheless the monomers listed below are only suitable examples and not intended to limit the scope of the invention to individual monomers.

### Monomers (A)

The anionic vinyl monomers (A) usable in this invention are vinyl monomers having anionic groups or groups providing a negative charge after salt formation. Examples are vinyl monomers having carboxyl groups, and their salts, or vinyl monomers comprising sulfonic acid groups or their salts.

As vinyl monomers having a carboxyl group, e.g. (meth)acrylic acid, maleic acid or fumaric acid can be used. Herein, (meth)acrylic acid describes one or both of acrylic acid and methacrylic acid. In the case that a salified form is used, the term salt, salified form or salt form describes any alkali metal salt or ammonium salt. Alkali metal salts and ammonium salts, e.g. include sodium salts, potassium salts, ammonium salts, ethanolamine salts and triethylamine salts. The salts may be used alone or in combination or in combination with the acids.

In addition, the salt form of the copolymers can also be obtained by neutralization of acid type polymers with alkali hydroxides or ammonia.

Examples of the vinyl monomers having carboxyl groups and the salts include acrylic acid, methacrylic acid, maleic acid, fumaric acid, sodium acrylate, potassium acrylate, sodium methacrylate, potassium methacrylate, sodium maleate, potassium maleate sodium fumarate, potassium fumarate, ammonium acrylate, ammonium methacrylate, ammonium maleate, ammonium fumarate, acrylic acid monoethanolamine salt, methacrylic acid monoethanolamine salt, maleic acid monoethanolamine salt, fumaric acid monoethanolamine salt. Preferably acrylic acid, methacrylic acid, sodium acrylate, sodium methacrylate, monoethanolamine salts of acrylic acid and monoethanolamine salts of methacrylic acid are used.

As vinyl monomers comprising sulfonic acid groups, vinyl styrene sulfonic acid or compounds preferably having general formula (1) or (2) can be used. Their alkali metal salts and ammonium salts can also be used.

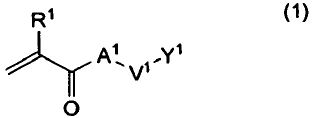

In general formula (1), R¹ represents a hydrogen or an alkyl group having one or two carbon atoms, Y¹ represents a sulfonic acid group (-SO₃H) or sulfonate, A¹ represents an oxygen atom or NH, and V¹ represents a linear alkylene group having 1 to 15 carbon atoms or a branched alkylene chain or an unsaturated hydrocarbon chain.

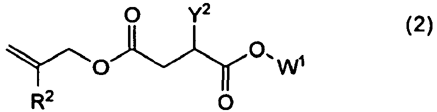

In general formula (2), R² represents a hydrogen or an alkyl group having one or two carbon atoms, Y² represents a sulfonic acid group (-SO₃H) or sulfonate. W¹ represents a linear or branched alkylene group with 1 to 20 carbon atoms, an alicyclic alkyl group or a linear alkylene group with 2 to 20 carbon atoms or a branched alkylene chain or alicyclic alkenyl group.

Examples of salts are alkali salts, like sodium salts, potassium salts, ammonium salts, monoethanolamine salts and triethylamine salt. The salts may be used alone or in combination with acids.

In addition, the salt form of the copolymers also can be obtained by neutralization of acid type copolymers with alkali hydroxides or ammonia.

Vinyl monomers having sulfonic acid groups, shown in general formula (1), include acrylamidomethane sulfonic acid, methacrylamidomethane sulfonic acid, acrylamidoethane sulfonic acid, methacrylamidoethane sulfonic acid, acrylamidopropane sulfonic acid, methacrylamidopropane sulfonic acid, 2- acrylamido-2-methylpropane sulfonic acid, 2-methacrylamido-2-methylpropane sulfonic acid, acryloxymethane sulfonic acid, acryloxymethane sulfonic acid, acryloxyethane sulfonic acid, methacryloxyethane sulfonic acid, acryloxypropane sulfonic acid, methacryloxypropane sulfonic acid.

Vinyl monomers having sulfonate groups include sodium acrylamidomethane sulfonate, sodium methacrylamidomethane sulfonate, sodium acrylamidoethane sulfonate, sodium methacrylamidoethane sulfonate, sodium acrylamidopropane sulfonate, sodium methacrylamidopropane sulfonate, sodium 2-acrylamido-2-methylpropane sulfonate, sodium 2-methacrylamido-2-methylpropane sulfonate potassium acrylamidomethane sulfonate, potassium methacrylamidomethane sulfonate, potassium acrylamidoethane sulfonate, potassium methacrylamidoethane sulfonate, potassium acrylamidopropane sulfonate, potassium methacrylamidopropane sulfonate, potassium 2-acrylamido-2-methylpropane sulfonate, potassium 2-methacrylamido-2-methylpropane sulfonate, triethylamine salt of acrylamidomethane sulfonic acid, triethylamine salt of methacrylamidomethane sulfonic acid, triethylamine salt of acrylamido-ethane sulfonic acid, triethylamine salt of methacryl-amido-ethane sulfonic acid, triethylamine salt of acrylamidopropane sulfonic acid, triethylamine salt of methacrylamidopropane sulfonic acid, triethylamine salt of 2- acrylamido-2-methylpropane sulfonate, triethylamine salt of 2-methacrylamido-2-methylpropane sulfonate, triethylamine salt of acryloxymethane sulfonate, triethylamine salt of acryloxymethane sulfonate, triethylamine salt of acryloxyethane sulfonate, triethylamine salt of methacryloxyethane sulfonate, triethylamine salt of acryloxypropane sulfonate, triethylamine salt of methacryloxypropane sulfonate.

Vinyl monomers having sulfonic acid groups and their salts, shown in the general formula (1), preferably include acrylamidomethane sulfonic acid, sodium acrylamidomethane sulfonate, triethylamine salt of acrylamidomethane sulfonic acid, 2-acrylamido-2-methylpropane sulfonic acid, sodium 2-acrylamido-2-methylpropane sulfonate (AMPS), triethylamine salt of 2-acrylamido-2-methylpropane sulfonate, methacrylamidomethane sulfonic acid , sodium methacrylamidomethane sulfonate, triethylamine salt of methacrylamidomethane sulfonic acid, 2- methacrylamido-2-methylpropane sulfonic acid, sodium 2-methacrylamido-2-methylpropane sulfonate, triethylamine salt of 2-methacrylamido-2-methylpropane sulfonate, more preferably 2-acrylamido-2-methylpropane sulfonic acid, sodium 2-acrylamido-2-methylpropane sulfonate, triethylamine salt of 2-acrylamido-2-methylpropane sulfonate, 2-methacrylamido-2-methylpropane sulfonic acid, sodium 2-methacrylamido-2-methylpropane sulfonate, triethylamine salt of 2- methacrylamido-2-methylpropane sulfonate. Preferably AMPS is used.

Vinyl monomers having sulfonic acid groups and their salts, shown in general formula (2), include mono-n-butyl-monoallyl sulfosuccinate, sodium salt of mono-n-butyl-monoallyl sulfosuccinate, potassium salt of mono-n-butyl-monoallyl sulfosuccinate, triethylamine salt of mono-n-butyl-monoallyl sulfosuccinate, mono-n-hexyl-monoallyl sulfosuccinate, sodium salt of mono-n-hexyl-monoallyl sulfosuccinate, potassium salt of mono-n-hexyl-monoallyl sulfosuccinate, triethylamine salt of mono-n-hexyl-monoallyl sulfosuccinate, monocyclohexyl-monoallyl sulfosuccinate, sodium salt of monocyclohexyl-monoallyl sulfosuccinate, potassium salt of monocyclohexyl-monoallyl sulfosuccinate, triethylamine salt of monocyclohexyl-monoallyl sulfosuccinate, mono-2-ethylhexylmonoallyl sulfosuccinate, sodium salt of mono-2-ethylhexyl-monoallyl sulfosuccinate, potassium salt of mono-2-ethylhexyl-monoallyl sulfosuccinate, triethylamine salt of mono-2-ethylhexylmonoallyl sulfosuccinate, mono-n-octyl-monoallyl sulfosuccinate, sodium salt of mono-n-octyl-monoallyl sulfosuccinate, potassium salt of mono-n-octyl-monoallyl sulfosuccinate, triethylamine salt of mono-n-octyl-monoallyl sulfosuccinate, mono-n-lauryl-monoallyl sulfosuccinate, sodium salt of mono-n-lauryl-monoallyl sulfosuccinate (LMAS), potassium salt of mono-n-lauryl-monoallyl sulfosuccinate, triethylamine salt of mono-n-lauryl-monoallyl sulfosuccinate, mono-n-stearyl-monoallyl sulfosuccinate, sodium salt of mono-n-stearyl-monoallyl sulfosuccinate, potassium salt of mono-n-stearyl-monoallyl sulfosuccinate, triethylamine salt of mono-n-stearyl-monoallyl sulfosuccinate.

In the case of the anionic vinyl monomers described above, mono-n-octyl-monoallyl sulfosuccinate, sodium salt of mono-n-octyl-monoallyl sulfosuccinate, mono-n-lauryl-monoallyl sulfosuccinate, sodium salt of mono-n-lauryl-monoallyl sulfosuccinate, more preferably mono-n-lauryl-monoallyl sulfosuccinate, sodium salt of mono-n-lauryl-monoallyl sulfosuccinate are preferably used.

The anionic vinyl monomers can be used alone or in combination with two or more of them.

The monomers (A) are employed in the polymerisation reaction in an amount of 5 to 99 weight-%, more preferably 25 to 99 weight-%, and most preferable 30 to 95 weight-%, and even more preferably 35 to 95 weight-% or 80 to 95 weight-% based on the weight of the sum of monomers employed in the polymerisation reaction.

### Monomers (B)

Concerning vinyl monomers having quaternary ammonium groups or tertiary amino groups (B), the preferable structure of the tertiary amino vinyl monomers (B) is shown in general formula (3).

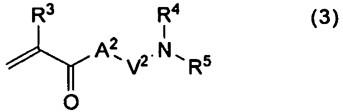

In the general formula (3), R³ represents a hydrogen or an alkyl group having one or two carbon atoms. A² represents an oxygen or NH. V² represents a linear alkyl or branched alkylene group having 1 to 15 carbon atoms or a linear or branched unsaturated alkenylene group having 2 to 15 carbon atoms. R⁴ or R⁵ represent an alkyl group having one or two carbon atoms, and R⁴ and R⁵ may be same or different.

Typical examples of the vinyl monomers are dimethylamino-ethyl acrylate, dimethylamino-ethyl methacrylate (DMEMA), dimethylaminopropyl acrylate, dimethyl-aminopropyl methacrylate, dimethylaminobutyl acrylate, dimethylaminobutyl methacrylate, diethylaminoethyl acrylate, diethylaminoethyl methacrylate, dimethylaminoethyl acrylamide, dimethylaminoethyl methacrylamide, dimethylaminopropyl acrylamide (DMAPA), dimethylaminopropyl methacrylamide (DMAPMA), dimethylaminobutyl acrylamide, dimethylaminobutyl methacrylamide, diethylaminoethyl acrylamide, diethylaminoethyl methacrylamide. Preferably DMAPA and DMAPMA are used, most preferably DMPAMA is used.

Other preferable compounds are dimethylaminoethyl methacrylate, dimethylamino-ethyl acrylate, dimethylamino-ethyl methacrylamide, dimethylaminoethyl acrylamide, and more preferably dimethylaminoethyl methacrylate, dimethylaminoethyl methacrylamide can be used.

The preferable structures of vinyl monomers having quaternary ammonium groups are shown in general formulas (4) and (5).

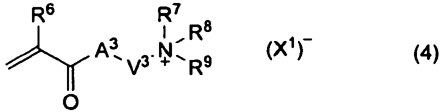

In general formula (4), R⁶ represents a hydrogen or an alkyl group having 1 or 2 carbon atoms, and A³ represents an oxygen or NH, and V³ represents a linear or branched alkylene group with 1 to 15 carbon atoms or a linear or branched alkenylene group with 2 to 15 carbon atoms. R⁷, R⁸, R⁹ represent alkyl groups having 1 or 2 carbon atoms, and X¹ represents a counter anion. R⁷, R⁸ and R⁹ may be the same or different.

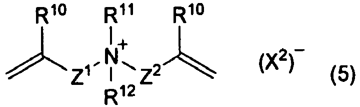

In general formula (5), R¹⁰ is defined as R⁶ in general formula (4), R¹¹ and R¹² are defined as R⁸ and R⁹ in general formula (4), and X² is defined as X¹ in general formula (4). Z¹ and Z² represent linear alkylene groups having 1 to 3 carbon atoms and may be the same or different. In addition, the two residues R¹⁰ in the monomer according to general formula (5) may be the same or different.

Concerning the counter ions in general formula (4), e.g. halide, sulfate, and organic acid ions are suitable. Especially chloride, bromide, sulfate and citrate are suitable for this purpose.

Typical examples are the following compounds having chloride as the counter ion, e.g. acryloxyethyltrimethyl ammonium chloride, methacryloxyethyltrimethyl ammonium chloride, acryloxypropyltrimethyl ammonium chloride, methacryloxypropyltrimethyl ammonium chloride, acryloxybutyltrimethyl ammonium chloride, methacryloxybutyltrimethyl ammonium chloride, acryloxyethyltriethyl ammonium chloride, methacryloxyethyltriethyl ammonium chloride, acrylamidoethyltrimethyl ammonium chloride, methacrylamidoethyltrimethyl ammonium chloride, acrylamidopropyltrimethyl ammonium chloride, methacrylamidopropyltrimethyl ammonium chloride, acrylamidobutyltrimethyl ammonium chloride, methacrylamidobutyltrimethyl ammonium chloride, acrylamidoethyltriethyl ammonium chloride, methacrylamidoethyltriethyl ammonium chloride. Preferably, acryloxyethyltrimethyl ammonium chloride, methacryloxyethyltrimethyl ammonium chloride, acrylamidopropyltrimethyl ammonium chloride, methacrylamidopropyltrimethyl ammonium chloride (MAPTAC), more preferably acryloxyethyltrimethyl ammonium chloride, methacrylamidopropyltrimethyl ammonium chloride, and acrylamidopropyltrimethyl ammonium chloride (AAPTAC) are used. However, this invention is not limited to the chlorides.

General formula (5) shows bi-dentate vinyl monomers containing a quaternary ammonium group. In the case of the compounds of general formula (5), counter ions can e.g. be halide, sulfate, and organic acid ions, preferably chloride, bromide, sulfate, and citrate.

Typical examples are diallyldimethyl ammonium chloride (DADMAC), diallyldimethyl ammonium bromide, diallyldiethyl ammonium chloride, diallyldiethyl ammonium bromide, preferably diallyldimethyl ammonium chloride, diallyldimethyl ammonium bromide, more preferably diallyldimethyl ammonium bromide. Vinyl monomers having quaternary ammonium group and tertiary amino group can be used alone or in combination with two or more of them.

The monomers (B) are employed in the polymerisation reaction in an amount of 0.01 to 50 weight-%, preferably 0.01 to 40 weight-%, more preferably 0.05 to 30 weight-%, even more preferably 0.2 to less than 20 weight-%, and most preferably 1 to 9 weight-% or 1 to 4 weight-% based on the weight of the sum of monomers employed in the polymerisation reaction. Further suitable amounts of monomers (B) are e.g. from 1 to 30 weight-%. In general the amount of monomer (B) is low, but just high enough to provide an enhanced durability of the anti-soil effect.

### Monomers (C)

Hydrophilic vinyl monomers (C) exhibit hydrophilic properties and preferably have the structure of general formula (6) 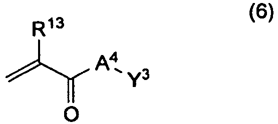 wherein, R¹³ represents a hydrogen or an alkyl group having 1 or 2 carbon atoms, and A⁴ represents an oxygen atom or NH. Y³ preferably represents (CH₂CH₂O)ₙ₁B¹, wherein n¹ preferably represents a number of 1 to 60 and B¹ preferably represents a hydrogen or a methyl group. Besides the polyethyleneoxy groups other polyalkylene groups, like e.g. polypropyleneoxy or polybutyleneoxy groups can be applied.

Typical examples of the compounds of general formula (6) are methoxy polyethyleneglycol methacrylate (with n¹ being 1 to 30), and preferably methoxy polyethyleneglycol methacrylate (with n¹ being 4, 9, 23 or 45).

Preferably the molecular weights of monomers (C) are in the range up to about 15,000 g/mol, more preferably 300 to 12,000 g/mol, most preferably 300 to 2,500 g/mol.

The monomers (C) can be employed in the polymerisation reaction in an amount of 0.5 to 80 weight-%, more preferably 1 to 60 weight-%, most preferably 2 to 30 weight-%, and even more preferably 10 to 30 weight-% based on the weight of the sum of monomers employed in the polymerisation reaction.

### Monomers (D)

Hydrophobic vinyl monomers (D) exhibit hydrophobic properties and preferably have the structure of general formula (7). 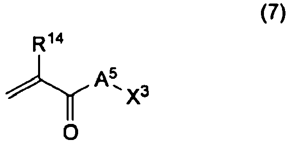 wherein R¹⁴ is defined as R¹³ in general formula (6), A⁵ is defined as A⁴ in general formula (6) and X³ represents a linear or branched alkyl group having 1 to 15 carbon atoms, or a linear or branched alkenyl group having 1 to 15 carbon atoms.

Typical examples of the compounds having general structure (7) are alkyl (meth)acrylates, like methyl acrylate, methyl methacrylate (MMA), ethyl acrylate, ethyl methacrylate, propyl acrylate, propyl methacrylate, butyl acrylate, butyl methacrylate, t-butyl acrylate, t-butyl methacrylate, hexyl acrylate, hexyl methacrylate, 2-ethylhexyl acrylate, 2-ethylhexyl methacrylate (2EHMA), octyl acrylate, octyl methacrylate, lauryl acrylate, lauryl methacrylate, propyl acrylamide, propylmethacrylamide, butylacrylamide, butyl methacrylamide, hexyl acrylamide, hexylmethacrylamide, octylacrylamide, octylmethacrylamide, lauryl acrylamide, laurylmethacrylamide, preferably propyl acrylate, propyl methacrylate, butyl acrylate, butyl methacrylate, t-butyl acrylate, t-butyl methacrylate, hexyl acrylate, hexyl methacrylate, 2-ethylhexyl acrylate, 2-ethylhexyl methacrylate, more preferably butyl acrylate, butyl methacrylate, t-butyl acrylate, t-butyl methacrylate.

The corresponding alkyl (meth)acrylamides are likewise employable.

Hydrophobic vinyl monomer (D) may be used alone or in combination with two or more of them.

The monomers (D) are optionally employed in the polymerisation reaction in an amount up to 30 weight-%, more preferably 0.01 to 10 weight-%, and most preferably 0.1 to 1 weight-%, based on the weight of the sum of monomers employed in the polymerisation reaction. In general the amount of monomer (D) is low, but just high enough to provide an additional enhancement of the durability of the anti-soil effect.

### Monomers (E)

The vinyl monomers (E) having silicone moieties are preferably compounds having the general formula (8)

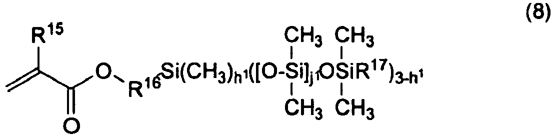

In general formula (8), R¹⁵ represents a hydrogen or an alkyl group having 1 or 2 carbon atoms, and R¹⁶ represents an alkyl group of 1 to 6, preferably 1 to 4 carbon atoms, having ether group. R¹⁷ represents an alkyl group having 1 to 30, preferably 1 to 22 carbon atoms, or a fluorinated alkyl group having 1 to 22 carbon atoms. The value for h¹ is 1 or 2, and j¹ is 0 to 500, preferably 0 to 300. For example, PDMS1 (R¹⁵=CH₃, R¹⁶=(CH₂)₃, R¹⁷=CH₃, h¹=2, j¹ ∼ 13) can preferably be used.

The silicone macromers described in general formula (8) may be used alone or in combination with two or more of them.

The average molecular weight of the silicone macromers, measured by GPC, is preferably 100 to 40000 g/mol, more preferably 200 to 20000 g/mol, to provide them with an excellent polymer durability and solubility of the polymer in the polymerisation solvent.

The monomers (E) are optionally employed in the polymerisation reaction in an amount of up to 20 weight-% based on the weight of the sum of monomers employed in the polymerisation reaction.

### Monomers (F)

A polyfunctional vinyl monomer (F) used in this invention is a vinyl monomer having polymerizable functional groups, whereby compounds having two functional groups are used in this invention. Those molecules can serve as crosslinkers in the copolymer and are therefore suitable to provide the copolymer with an enhanced durability for the desired anti-soil effect.

Desirably, polyfunctional monomer containing one or more hydrophilic moieties in the molecule are used.

The polyfunctional vinyl monomer (F) has the general formula (9), which exhibits a typical example of a bifunctional monomer.

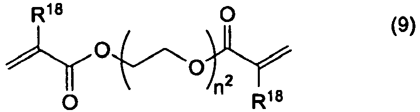

In the above general formula (9), R¹⁸ represents a hydrogen or an alkyl group having 1 or 2 carbon atoms, and n² represents a number of 1 to 20.

Among the above polyfunctional monomers, monomers described as general formula (9) can preferably be used, more preferably are those monomers having a hydrogen or methyl group as R¹⁸, and a value of 1 to 15 as n². For example, PEG400DA (R¹⁸=H, n²=8) can preferably be used.

The monomers (F) are employed in the polymerisation reaction in an amount of 0.1 to 15 weight-%, more preferably 0.1 to 5 weight-% and most preferably 0.1 to 2 weight-% based on the weight of the sum of monomers employed in the polymerisation reaction.

### Cleaning compositions

Besides the copolymers of the invention, obtained by polymerisation of the above monomers, further ingredients can optionally be contained in the cleaning compositions according to the invention. Suitable further ingredients are e.g. acids and bases to adjust the pH value of the composition, surfactants, solvents, builders, thickeners, fragrances, colorants and other common ingredients for cleaning purposes, which are known to the skilled in the art. Such further ingredients are listed below.

### Further ingredients contained in cleaning compositions

The cleaning compositions according to the invention can be adjusted to be either acidic, neutral or alkaline and accordingly usually have a pH value ranging from about 0 to about 14, preferably 0 to 7, in particular 1 to 4.

For adjusting the pH, the composition can comprise one or more inorganic or organic acids and/or one or more bases. In this connection, it is to be taken into consideration that the lower the pH, the better the limescale-dissolving ability of the composition, but also, at the same time, the greater the attack by the composition toward metallic hard surfaces.

### Acids and Bases

Suitable acids are, in particular, formic acid, acetic acid, citric acid, amidosulfonic acid, and the mineral acids hydrochloric acid, sulfuric acid and nitric acid and mixtures thereof. Particular preference is given to acids chosen from the group comprising amidosulfonic acid, citric acid, formic acid, and lactic acid. Preferred bases originate from the group of alkali metal and alkaline earth metal hydroxides and carbonates, in particular alkali metal hydroxides, of which particular preference is given to potassium hydroxide and especially sodium hydroxide. Further basic compounds are e.g. amines like monoethanolamine or triethanolamine.

### Durability enhancing agents

The present inventors found that the durability of the compositions, i.e. the persistence of the soil removal performance can be enhanced by the addition of preferably up to 10 weight-%, more preferably 0.1 to 5 weight-% of one or more polyalkylene glycols, preferably polyethylene glycols having a number average molecular weight of preferably 200 to 600,000 g/mol, more preferably 8,000 to 200,000 g/mol and most preferably 10,000 to 50,000 g/mol. Instead of the preferred polyethylene glycols, other polyalkylene glycols, like polypropylene glycols, polybutylene glycol of mixed polyalkylene glycols, like polypropylene/polyethylene glycols can be employed.

### Surfactants

Any kind of known surfactants like cationic, anionic, nonionic or betaine based surfactants can be present in the compositions of the present invention. Most preferable are anionic and nonionic surfactants. The amount of the surfactants preferably ranges from 0.001 to 10 % by weight, more preferably 0.01 to 5 % by weight and most preferable 0.1 to 3 % by weight

### Cationic Surfactants

Any cationic surfactants which do not interfere with the action of the copolymer according to the invention can optionally be employed in the aqueous cleaning composition according to the invention. Suitable cationic surfactants are e.g. quaternary ammonium compounds of formulas (A) and (B) 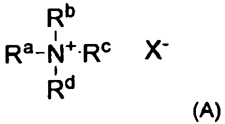 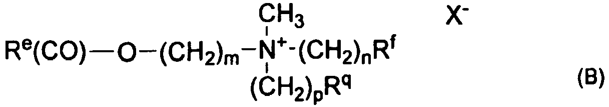 wherein in formula (A) residues R^{a} and R^{b} denote acyclic alkyl residues having 12 to 24 carbon atoms, R^{c} denotes a saturated C₁-C₄-alkyl or C₁-C₄-hydroxyalkyl residue, R^{d} denotes an aromatic residue or a residue which is the same as R^{a}, R^{b} or R^{c}. X⁻ denotes a halide, a methosulfate, a methophosphate or phosphate ion, or mixtures thereof. Examples of cationic surfactants according to formula (A) are didecyldimethylammonium chloride, ditallowdimethylammonium chloride or dihexadecylammonium chloride. Compounds of formula (B) are so-called esterquats. Esterquats possess an excellent biodegradability. In formula (B) R^{e} denotes an aliphatic alkyl residue with 12 to 22 carbon atoms and 0, 1, 2 or 3 double bonds; R^{f} denotes hydrogen, OH or O(CO)R^{h}, R^{g} (independent of R^{h}) denotes H, OH or O(CO)Rⁱ, whereby R^{h} and Rⁱ each independently denote an aliphatic alkyl residue with 12 to 22 carbon atoms and 0, 1, 2 or 3 double bonds. m, n and p each independently denote the values 1, 2 or 3. X⁻ can be an halide, methosulfate, methophosphate or phosphate ion as well as mixtures thereof. Preferred compounds are those compounds wherein R^{f} denotes the group O(CO)R^{h} and R^{e} and R^{h} are alkyl residues having 16 to 18 carbon atoms. Particularly preferred are compounds wherein R^{g} additionally denotes OH. Examples for compounds of formula (B) are methyl-N-(2-hydroxyethyl)-N,N-di(tallowacyl-oxyethyl)ammonium methosulfate, Bis-(palmitoyl)-ethyl-hydroxyethyl-methyl-ammonium methosulfate or methyl-N,N-bis(acyloxyethyl)-N-(2-hydroxyethyl)ammonium methosulfate. In case quaternized compounds of formula (B) containing unsaturated alkyl chains are employed, acyl groups are preferred, whereby the iodine number of the corresponding fatty acids range from 5 to 80, preferably 10 to 60 and most preferably 15 to 45 and comprise a cis/trans isomeric ratio (in % by weight) of more than 30 : 70, preferably more than 50: 50 and most preferably more than 70: 30. Commercially available compounds are e.g. methylhydroxyalkyldialkoyloxyalkylammonium methosulfate, available from Stepan under the tradename Stepantex^{®}, the Dehyquart^{®} products obtainable from Cognis or the Rewoquat^{®} products available from Goldschmidt-Witco.

Further preferred compounds are the diesterquats of formula (C), obtainable under the tradename Rewoquat® W 222 LM and CR 3099, respectively.

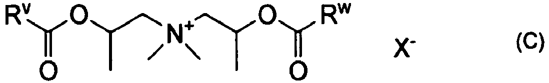

R^{v} and R^{w} independently of each other denote an aliphatic residue with 12 to 22 carbon atoms containing 0, 1, 2 or 3 double bonds.

Besides the above described quaternary compounds other known quaternary compounds like imidazolinium compounds of formula (D) can be employed, 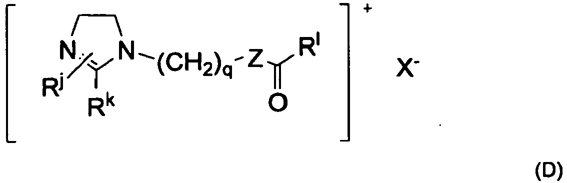 wherein R^{j} denotes H or a saturated alkyl residue having 1 to 4 carbon atoms, R^{k} und R^{l} each independently denote an aliphatic, saturated or unsaturated alkyl residue having 12 to 18 carbon atoms, R^{k} can alternatively denote O(CO)R^{u}, wherein R^{u} denotes an aliphatic, saturated or unsaturated alkyl residue having 12 to 18 carbon atoms, and Z denotes an NH group or oxygen and X⁻ denotes an anion. The values for q can be integers from 1 to 4.

Further suitable quaternary compounds are described by formula (E), 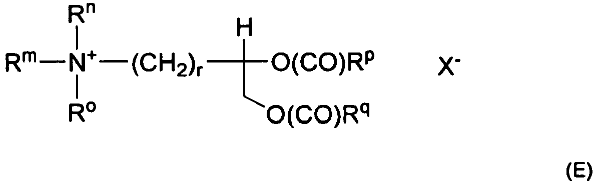 wherein R^{m}, Rⁿ and R^{o} independently denote an C₁₋₄-alkyl, C₁₋₄-alkenyl or C₁₋₄-hydroxyalkyl group, R^{p} and R^{q} each independently denote an C₈₋₂₈-alkyl group and r is a number from 0 to 5.

Besides the compounds according to formulas (A) and (B) short-chained, water soluble, quaternary ammonium compounds can be employed, like trihydroxyethylmethylammonium methosulfate or alkyltrimethylammonium chlorides, dialkyldimethylammonium chlorides and trialkylmethylammonium chlorides, as e.g. cetyltrimethylammonium chloride, stearyltrimethylammonium chloride, distearyldimethylammonium chloride, lauryldimethylammonium chloride, lauryldimethylbenzylammonium chloride and tricetylmethylammonium chloride.

Moreover, protonated alkylamino compounds, showing softening effects, and the non-quaternated, protonated precursors of cationic emulgators are suitable.

Further cationic compounds which are suitable to be employed in the compositions according to the invention are quaternized protein hydrolyzates.

Among the most suitable cationic compounds polyquaternium polymers are mentioned, as described in the CTFA Cosmetic Ingredient Dictionary (The Cosmetic, Toiletry und Fragrance, Inc., 1997). Particularly suitable are the so-called merquats, like polyquaternium-6-, polyquaternium-7-, polyquaternium-10 polymers (Ucare Polymer IR 400; Amerchol), polyquaternium-4 copolymers, like graft copolymers with a cellulose skeleton and quaternary ammonium groups, which are bound through allyldimethylammonium chloride, cationic cellulose derivates, like cationic guar, like guarhydroxypropyltriammonium chloride, and similar quaternized guar derivates (e.g. Cosmedia Guar, produced by Cognis GmbH), cationic quaternary carbohydrate derivatives (cationic alkylpolyglucosides), e.g. Glucquat^{®}100, according to CTFA-nomenclature a "lauryl methyl gluceth-10 hydroxypropyl dimonium chloride", copolymers of PVP and dimethylaminomethacrylate, copolymers of vinylimidazole and vinylpyrrolidone, aminosilicone polymers and copolymers.

Further employable are polyquaternized polymers (e. g. Luviquat Care available from BASF) and cationic biopolymers on the basis of chitin and its derivatives, e.g. Chitosan^{®} (manufacturer: Cognis).

Further suitable cationic compounds are cationic silicone oils, like e.g. the commercially available products Q2-7224 (available from Dow Corning; a stabilized trimethylsilylamodimethicone), Dow Corning 929 emulsion (containing a hydroxyl-amino-modified silicone, also called Amodimethicone), SM-2059 (available from General Electric), SLM-55067 (available from Wacker) Abil^{®}-Quat 3270 and 3272 (available from Goldschmidt-Rewo; diquaternary polydimethylsiloxane, Quaternium-80), as well as Siliconquat Rewoquat^{®} SQ 1 (Tegopren^{®} 6922, available from Goldschmidt-Rewo).

Further suitable are compounds of formula (F), 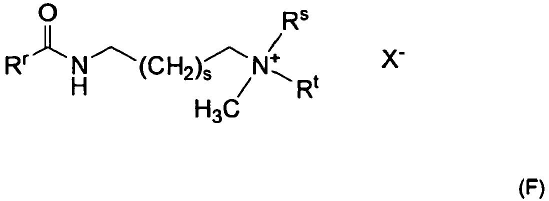 which can be alkylamidoamines in their non-quaternized, or as shown, in their quaternized form. R^{r} can be an aliphatic alkyl residue with 12 to 22 carbon atoms with 0, 1, 2 or 3 double bonds. Values for s can range from 0 to 5. R^{s} and R^{t} denote independently of each other hydrogen, C₁₋₄-alkyl or C₁₋₄-hydroxyalkyl. Preferred compounds are fatty acid amido amines, like stearylamidopropyldi-methylamine available under the tradename Tego Amid^{®}S 18 or 3-talgamidopropyl-trimethylammonium methosulfate available under the tradename Stepantex^{®} X 9124, both showing an excellent biodegradability. Particularly preferred are alkylated quaternized ammonium compounds, of which at least one alkyl chain contains an ester group and/or an amide group, in particular N-methyl-N(2-hydroxyethyl)-N,N-(ditalgacyloxyethyl)ammonium methosulfate and/or N-Methyl-N(2-hydroxyethyl)-N,N-(palmitoyloxyethyl)ammonium methosulfate.

### Anionic surfactants

Anionic surfactants, which may optionally be present in the compositions according to the invention, may be aliphatic sulfates, such as fatty alcohol sulfates, fatty alcohol ether sulfates, dialkyl ether sulfates, monoglyceride sulfates and aliphatic sulfonates, such as alkanesulfonates, olefinsulfonates, ether sulfonates, *n*-alkyl ether sulfonates, ester sulfonates and lignosulfonates. For the purposes of the present invention it is also possible to use alkylbenzenesulfonates, fatty acid cyanamides, sulfosuccinates (sulfosuccinic esters), sulfosuccinamates, sulfosuccinamides, fatty acid isothionates, acylamino-alkanesulfonates (fatty acid taurides), fatty acid sarcosinates, ether carboxylic acids and alkyl (ether) phosphates, and α-sulfo fatty acid salts, acyl glutamates, monoglyceride disulfates and alkyl ethers of glycerol disulfate. For the purposes of the present invention, preference is given to the fatty alcohol sulfates and/or fatty alcohol ether sulfates, in particular the fatty alcohol sulfates. Fatty alcohol sulfates are products of sulfatation reactions on corresponding alcohols, while fatty alcohol ether sulfates are products of sulfation reactions on alkoxylated alcohols. Here, the person skilled in the art generally takes the term alkoxylated alcohols to mean the reaction products of alkylene oxide, preferably ethylene oxide, with alcohols, for the purpose of the present invention preferably with long-chain alcohols. As a rule, n mols of ethylene oxide and one mol of alcohol produce a complex mixture of addition products of varying degrees of ethoxylation, depending on the reaction conditions. A further embodiment of the alkoxylation consists in the use of mixtures of alkylene oxides, preferably of the mixture of ethylene oxide and propylene oxide. Preferred fatty alcohol ether sulfates are the sulfates of fatty alcohols which have low degrees of ethoxylation having 1 to 4 ethylene oxide units (EO), in particular 1 to 2 EO, for example 1.3 EO. The anionic surfactants are usually used as salts, but also as acid. The salts are preferably alkali metal salts, alkaline earth metal salts, ammonium salts and mono-, di-and trialkanolammonium salts, for example mono-, di- or triethanolammonium salts, in particular lithium, sodium, potassium or ammonium salts, particularly preferably sodium or potassium salts, most preferably sodium salts.

### Nonionic surfactants

Nonionic surfactants, which are optionally present in the compositions according to the invention, may be alkoxylates, such as polyglycol ethers, fatty alcohol polyglycol ethers, alkylphenol polyglycol ethers, terminally capped polyglycol ethers, mixed ethers and hydroxy mixed ethers and fatty acid polyglycol esters. It is also possible to use ethylene oxide, propylene oxide, block polymers and fatty acid alkanolamides and fatty acid polyglycol ethers. An important class of nonionic surfactants which can be used according to the invention are the polyol surfactants and here particularly the glyco surfactants, such as alkyl polyglycosides and fatty acid glucamides. Particular preference is given to the alkyl polyglycosides, in particular the alkyl polyglucosides. Alkyl polyglycosides are surfactants obtained by the reaction of sugars and alcohols by relevant methods of preparative organic chemistry, the result being a mixture of monoalkylated, oligomeric or polymeric sugars depending on the nature of the preparation. Preferred alkyl polyglycosides (APG) are the alkyl polyglucosides, where, particularly preferably, the alcohol is a long-chain fatty alcohol or a mixture of long-chain fatty alcohols having branched or unbranched C₈-C₁₈-alkyl chains, and the degree of oligomerization (DP) of the sugars is between 1 and 10, preferably 1 to 6, in particular 1.1 to 3, most preferably 1.1 to 1.7, for example C₈₋₁₀-alkyl 1.5-glucoside (DP of 1.5), obtainable under the tradename APG 220 UPW. Preferred fatty alcohol polyglycol ethers are unbranched or branched, saturated or unsaturated C₈₋₂₂-alcohols alkoxylated with ethylene oxide (EO) and/or propylene oxide (PO) and having a degree of alkoxylation up to 30, preferably ethoxylated C₁₀₋₁₈-fatty alcohols having a degree of ethoxylation of less than 30, preferably 1 to 20, in particular 1 to 12, particularly preferably 1 to 8, most preferable 2 to 5, for example C₁₂₋₁₄-fatty alcohol ethoxylates having 2, 3 or 4 EO, or a mixture of the C₁₂₋₁₄-fatty alcohol ethoxylates having 3 and 4 EO in the weight ratio of 1:1 or isotridecyl alcohol ethoxylate having 5, 8 or 12 EO.

### Organic solvents

In particular embodiments of the invention, the compositions can further comprise one or more organic solvents in an amount of preferably less than 80 % by weight, preferably 0.001 to 80 % by weight, in particular 0.01 to 15 % by weight, particularly preferably 0.1 to 5 % by weight. Suitable solvents are, for example, saturated or unsaturated, preferably saturated, branched or unbranched C₁₋₂₀-hydrocarbons, preferably C₂₋₁₅-hydrocarbons, having one or more hydroxyl groups, preferably one hydroxyl group, and optionally one or more ether functions C-O-C, i. e. oxygen atoms interrupting the carbon atom chain. Preferred solvents are the C₁₋₆-alcohols, in particular ethanol, *n-*propanol or iso-propanol, and also the C₂₋₆ alkylene glycols and poly-C₂₋₃ alkylene glycol ethers - optionally etherified on one side by a C₁₋₆ alkanol - having on average 1 to 9 identical or different, preferably identical, alkylene glycol groups per molecule, in particular the poly-C₂₋₃-alkylene glycol ethers etherified on one side by a C₁₋₆-alkanol and having, on average, 1 to 9, preferably 2 to 3, ethylene glycol or propylene glycol groups, for example PPG-2 methyl ether (dipropylene glycol monomethyl ether). Examples of solvents are the following compounds named in accordance with *INCI*: Alcohol (Ethanol), Buteth-3, Butoxydiglycol, Butoxyethanol, Butoxyisopropanol, Butoxypropanol, n-Butyl Alcohol, t-Butyl Alcohol, Butylene Glycol, Butyloctanol, Diethylene Glycol, Di-methoxydiglycol, Dimethyl Ether, Dipropylene Glycol, Ethoxydiglycol, Ethoxyethanol, Ethyl Hexanediol, Glycol, Hexanediol, 1,2,6-Hexanetriol, Hexyl Alcohol, Hexylene Glycol, Isobutoxypropanol, Isopentyldiol, Isopropyl Alcohol (*iso*-Propanol), 3-Methoxybutanol, Methoxydiglycol, Methoxyethanol, Methoxyisopropanol, Methoxymethylbutanol, Methoxy PEG-10, Methylal, Methyl Alcohol, Methyl Hexyl Ether, Methylpropanediol, Neopentyl Glycol, PEG-4, PEG-6, PEG-7, PEG-8, PEG-9, PEG-6 Methyl Ether, Pentylene Glycol, PPG-7, PPG-2-Buteth-3, PPG-2 Butyl Ether, PPG-3 Butyl Ether, PPG-2 Methyl Ether, PPG-3 Methyl Ether, PPG-2 Propyl Ether, Propanediol, Propyl Alcohol (*n*-Propanol), Propylene Glycol, Propylene Glycol Butyl Ether, Propylene Glycol Propyl Ether, Tetrahydrofurfuryl Alcohol, Trimethylhexanol. Monomeric or homo- or heteropolymeric, in particular monomeric, and homodimeric and trimeric C₂-C₄-alkylene glycols etherified or esterified with aliphatic or aromatic alcohols, e. g. methanol, ethanol, *n*-propanol, *n*-butanol, *tert*-butanol or phenol, or carboxylic acids, e. g. acetic acid or carbonic acid, are sold, for example, under the tradename *Dowanol*^{®} from *Dow Chemical,* and the products sold under the tradenames *Arcosolv*^{®} and *Arconate^{®}* by *Arco Chemical,* such as the products referred to below by their *INCI* name according to the *International Dictionary of Cosmetic Ingredients* by *The Cosmetic, Toiletry and Fragrance Association* (CTFA), e. g. Butoxydiglycol *(Dowanol^{®} DB*), Methoxydiglycol *(Dowanol^{®} DM*), PPG-2 Methyl Ether (*Dowanol*^{®} *DPM*), PPG-2 Methyl Ether Acetate *(Dowanol^{®} DPMA),* PPG-2 Butyl Ether *(Dowanol*^{®} *DPnB),* PPG-2 Propyl Ether *(Dowanol^{®} DPnP),* Butoxyethanol *(Dowanol^{®} EB*), Phenoxyethanol *(Dowanol*^{®} *EPh),* Methoxyisopropanol *(Dowanol*^{®} *PM),* PPG-1 Methyl Ether Acetate *(Dowanol^{®} PMA),* Butoxyisopropanol *(Dowanol*^{®} *PnB),* Propylene Glycol Propyl Ether *(Dowanol*^{®} *PnP),* Phenoxyisopropanol *(Dowanol*^{®} *PPh),* PPG-3 Methyl Ether *(Dowanol^{®} TPM*), and PPG-3 Butyl Ether *(Dowanol^{®} TPnB)* and Ethoxyisopropanol (*Arcosolv^{®} PE*), *tert*-Butoxyisopropanol *(Arcosolv*^{®} *PTB),* PPG-2 tert-Butyl Ether *(Arcosolv*^{®} *DPTB)* and Propylencarbonate (*Arconate*^{®} *PC*) of which Butoxyisopropanol (Dipropylene glycol n-butyl ether, *Dowanol*^{®} *PnB)* and in particular PPG-2 Methyl Ether (Dipropylene glycol methyl ether, *Dowanol DPM*) are preferred.

### Complexing agents and Builders

The composition can also comprise one or more complexing agents, preferably in an amount of from 0.001 to 10 % by weight, in particular 0.01 to 5 % by weight, particularly preferable 0.1 to 3 % by weight. Complexing agents (*INCI* Chelating Agents), also called sequestering agents, are ingredients which are able to complex and deactivate metal ions in order to avoid their disadvantageous effects on the stability or the appearance of the compositions, for example clouding. In this connection it is on the one hand important to complex the calcium and magnesium ions of water hardness which are incompatible with a large number of ingredients. On the other hand, the complexation of ions of heavy metals such as iron and copper delays the oxidative decomposition of the finished compositions. In addition, the complexing agents assist the cleaning action. Suitable are, for example, the following complexing agents referred to in accordance with *INCI*: Aminotrimethylene, Phosphonic Acid, Beta-Alanine Diacetic Acid, Calcium Disodium EDTA, Citric Acid, Cyclodextrin, Sodium Carbonate, Cyclohexanediamine, Tetraacetic Acid, Diammonium Citrate, Diammonium EDTA, Diethylenetriamine Pentamethylene Phosphonic Acid, Dipotassium EDTA, Disodium Azacycloheptane Diphosphonate, Disodium EDTA, Disodium Pyrophosphate, EDTA, Etidronic Acid, Galactaric Acid, Gluconic Acid, Glucuronic Acid, HEDTA, Hydroxypropyl Cyclodextrin, Methyl Cyclodextrin, Pentapotassium Triphosphate, Pentasodium Aminotrimethylene Phosphonate, Pentasodium Ethylenediamine Tetramethylene Phosphonate, Pentasodium Pentetate, Pentasodium Triphosphate, Pentetic Acid, Phytic Acid, Potassium Citrate, Potassium EDTMP, Potassium Gluconate, Potassium Polyphosphate, Potassium Triphosphonomethylamine Oxide, Ribonic Acid, Sodium Chitosan Methylene Phosphonate, Sodium Citrate, Sodium Diethylenetriamine Pentamethylene Phosphonate, Sodium Dihydroxyethylglycinate, Sodium EDTMP, Sodium Gluceptate, Sodium Gluconate, Sodium Glycereth-1 Polyphosphate, Sodium Hexametaphosphate, Sodium Metaphosphate, Sodium Metasilicate, Sodium Phytate, Sodium Poly-dimethylglycineophenolsulfonate, Sodium Trimetaphosphate, TEA-EDTA, TEA-Polyphosphate, Tetrahydroxyethyl Ethylenediamine, Tetrahydroxypropyl Ethylenediamine, Tetrapotassium Etidronate, Tetrapotassium Pyrophosphate, Tetrasodium EDTA, Tetrasodium Etidronate, Tetrasodium Pyrophosphate, Tripotassium EDTA, Trisodium Dicarboxymethyl Alaninate, Trisodium EDTA, Trisodium HEDTA, Trisodium NTA and Trisodium Phosphate.

### Thickeners

The cleaning composition optionally comprises one or more thickeners, usually in an amount of from 0.001 to 10 % by weight, preferably 0.01 to 3 % by weight, in particular 0.1 to 1 % by weight. For the purposes of the invention, thickeners are organic natural thickeners, such as agar agar, carrageen, tragacanth, gum arabic, alginates, pectins, polyoses, guar flour, carob seed grain, starch, dextrins, gelatin, casein; organic modified natural substances, such as carboxymethylcellulose and cellulose ethers, hydroxyethylcellulose and hydroxypropylcellulose and the like, carob flour ether; organic fully synthetic thickeners such as polyacrylic and polymethacrylic compounds, vinyl polymers, polycarboxylic acids, polyethers, polyimines, polyamides and inorganic thickeners such as polysilicas, clay minerals, such as montmorillonites, zeolites, silicas. As one or more thickeners, the cleaning composition preferably comprises one or more polymers, in particular polymers on a poly(meth)acrylate basis and/or polysaccharides, like, e. g., substituted celluloses, guar gum or xanthan derivatives, like Kelzan ASX-T and nanoparticulate inorganic compounds.

### Polymers as thickeners

For the purposes of the present invention, polymers are polycarboxylates, preferably homo- and copolymers of acrylic acid, in particular acrylic acid copolymers, such as acrylic acid/methacrylic acid copolymers, and polysaccharides, in particular heteropolysaccharides, and other customary polymeric thickeners. Suitable polysaccharides and heteropolysaccharides are the polysaccharide gums, for example gum arabic, agar, alginates, carageens and their salts, guar, guaran, tragacanth, gellan, ramsan, dextran or xanthan and their derivatives, e. g. propoxylated guar, and its mixtures. Other polysaccharide thickeners, such as starches or cellulose derivatives, can be used as alternatives, but are preferably used in addition to a polysaccharide gum, for example starches from a wide variety of origins and starch derivatives, e. g. hydroxyethyl starch, starch phosphate esters or starch acetates, or carboxymethylcellulose or its sodium salt, methyl-, ethyl-, hydroxyethyl-, hydroxypropyl-, hydroxypropylmethyl- or hydroxyethylmethylcellulose or cellulose acetate. An example of a hydroxyethyl-cellulose is the hydroxyethylcelluose *Tylose*® *H 60000 YP 2* from *Clariant,* which has delayed swelling. Preference is given here to the anionic polysaccharides or heteropolysaccharide. A particular preferred polymer is the microbial anionic heteropolysaccharide xanthan gum, which is produced by Xanthomonas campestris and a few other species under aerobic conditions and has a molecular weight of 2-15x10⁶, and is available, for example, from *Kelco* under the tradename *Keltrol®,* e. g. as a cream-colored powder *Keltrol*® *T* (Transparent) or as white granules *Keltrol ® RD* (*Rea*dily Dispersible), and from *Rhône Poulenc* and *Rhodopol*® *50 MD.* Suitable acrylic acid polymers are, for example, high molecular weight homopolymers of acrylic acid crosslinked with a polyalkenyl polyether, in particular an allyl ether of sucrose, pentaerythritol or propylene, (*INCI* Carbomer), which are also referred to as carboxyvinyl polymers. Such polyacrylic acids are available inter alia from *BFGoodrich* under the tradename *Carbopol®* (e. g. *Carbopol*® *940* (molecular weight about 4 000 000), *Carbopol*® *941* (molecular weight about 1 250 000) or *Carbopol*® *934* (molecular weight about 3 000 000). Also suitable are anionic methacrylic acid/ethyl acrylate copolymers, e. g. *Rohagit*® *SD 15* from *Röhm GmbH.* However, particularly suitable acrylic acid polymers are the following acrylic acid copolymers: (i) copolymers of two or more monomers from the group of acrylic acid, methacrylic acid and their mono esters preferably formed with C₁₋₄ alkanols (*INCI* Acrylates Copolymer), which include, for example, the copolymers of methacrylic acid, butyl acrylate and methyl methacrylate (CAS 25035-69-2) or of butyl acrylate and methyl methacrylate (CAS 25852-37-3), and which are available, for example, from *Rohm* & *Haas* under the tradenames *Aculyn*® and *Acusol*®, e. g. the anionic non-associative polymers *Aculyn*® 33 (crosslinked), *Acusol*® *810* and *Acusol*® *830* (CAS 25852-37-3); (ii) crosslinked high molecular weight acrylic acid copolymers which include, for example, the copolymers of C₁₀₋₃₀-alkyl acrylates crosslinked with an allyl ether of sucrose or of pentaerythritol with one or more monomers from the group of acrylic acid, methacrylic acid and its monoesters preferably formed with C₁₋₄-alkanols (*INCI* Acrylates/C10-30 Alkyl Acrylate Crosspolymer), and which are available, for example, from *BFGoodrich* under the tradenames *Carbopol*®, e. g. the hydrophobicized *Carbopol*® *ETD 2623* and *Carbopol® 1382* (*INCI* Acrylates/C10-30 Alkyl Acrylate Crosspolymer), and *Carbopol*® *AQUA 30* (formerly *Carbopol®* EX *473*).

### Nanoparticulate compounds as thickeners

Suitable nanoparticulate inorganic compounds are nanoparficulate metal oxides, metal oxide hydrates, metal hydroxides, metal carbonates and metal phosphates, and silicates. The average particle size of the nanoparticulate compounds is usually 1 to 200 nm, preferably 5 to 100 nm, in particular 10 to 50 nm, the value being based on the particle diameter in the longitudinal direction, i. e. in the direction of the largest dimension of the particles. Suitable nanoparticulate oxides are e. g. magnesium oxide, aluminum oxide (Al₂O₃), titanium dioxide, zirconium dioxide and zinc oxide, and silicon dioxide. A suitable nanoparticulate oxide hydrate is e. g. aluminum oxide hydrate (boehmite) and suitable nanoparticulate hydroxides are e. g. calcium hydroxide and aluminum hydroxide. Suitable nanoparticulate silicates are e. g. magnesium silicate and aluminosilicates such as zeolites. Nanoparticulate oxides, oxide hydrates or hydroxides can be prepared by known methods, e. g. in accordance with EP-A-0 711 217 *(Nanophase Technologies Corp.)* and are sold by said company under the tradename *NanoTek*®*.* The hydrolysis of organometallic compounds also gives oxide hydrates and hydroxides in very fine distribution. Preferred silicates are the sheet silicates (phyllosilicates), and a preferred carbonate is hydrotalcite (international generic name for dialuminum hexamagnesium carbonate hexadecahydroxide tetrahydrate, Al₂Mg₆(OH)₁₆CO₃●4H₂O).

### Colorants and fragrances

The composition can accordingly comprise one or more fragrances, preferably in an amount from 0.0001 to 10 % by weight, in particular 0.001 to 3 % by weight, particularly preferable 0.01 to 1 % by weight, and/or one or more colorants, preferably in an amount from 0.0001 to 10 % by weight, in particular 0.001 to 5 % by weight, particularly preferably 0.001 to 1 % by weight.

### Further optional ingredients

Depending on the make-up of the composition according to the invention, one or more further ingredients customary for the respective intended purpose of the composition may be present, in particular from the group of corrosion inhibitors, antimicrobial acting agents, bleaches and enzymes.

### Corrosion inhibitors

Furthermore, the composition can accordingly comprise one or more corrosion inhibitors, preferably in an amount of from 0.01 to 10 % by weight, in particular 0.1 to 5 % by weight, particularly preferable 0.5 to 3 % by weight, most preferably 1 to 2 % by weight. Suitable corrosion inhibitors are, for example, the following substances named in accordance with *INCI:* Cyclohexylamine, Diammonium Phosphate, Dilithium Oxalate, Dimethylamino Methylpropanol, Dipotassium Oxalate, Dipotassium Phosphate, Disodium Phosphate, Disodium Pyrophosphate, Disodium Tetrapropenyl Succinate, Hexoxyethyl Diethylammonium, Phosphate, Nitromethane, Potassium Silicate, Sodium Aluminate, Sodium Hexametaphosphate, Sodium Metasilicate, Sodium Molybdate, Sodium Nitrite, Sodium Oxalate, Sodium Silicate, Stearamidopropyl Dimethicone, Tetrapotassium Pyrophosphate, Tetrasodium Pyrophosphate, Triisopropanolamine.

### Antimicrobial active ingredients

Disinfection and sanitation represent a particular form of cleaning. In a corresponding particular embodiment of the invention, the cleaning composition thus comprises one or more antimicrobial active ingredients, preferably in an amount of from 0.01 to 1 % by weight, preferably 0.02 to 0.8 % by weight, in particular 0.05 to 0.5 % by weight, particularly preferable 0.1 to 0.3 % by weight, most preferably 0.2 % by weight. For the purposes of the teaching according to the invention, the terms disinfection, sanitation, antimicrobial action and antimicrobial active ingredient have the customary specialist meanings given. While disinfection in the narrower sense of medical practice means the killing of, in theory, all infection germs, sanitation means the elimination as far as possible of all germs, including saprophytic ones which are normally harmless for humans. In this connection, the extent of disinfection or sanitation is dependent on the antimicrobial action of the composition used, which decreases with decreasing content of antimicrobial active ingredient or increasing dilution of the composition for use. Suitable according to the invention are, for example, antimicrobial active ingredients from the groups of alcohol, aldehydes, antimicrobial acids and salts thereof, carboxylic esters, acid amides, phenols, Phenoxyethanol *(Dowanol® EPh),* Methoxyisopropanol *(Dowanol*® *PM*), PPG-1 Methyl Ether Acetate *(Dowanol® PMA),* Butoxyisopropanol *(Dowanol® PnB),* Propylene Glycol Propyl Ether *(Dowanol*® *PnP),* Phenoxyisopropanol (*Dowanol*® *PPh*), PPG-3 Methyl Ether (*Dowanol*® *TPM*), and PPG-3 Butyl Ether (*Dowanol® TPnB*) and Ethoxyisopropanol (Arccsolv® *PE*), *tert*-Butoxyisopropanol (Arcosolv® *PTB*), PPG-2 *tert*-Butyl Ether (Arcosolv® *DPTB),* and Propylencarbonate (Arconate® *PC*) of which Butoxyisopropanol (Dipropylene glycol n-butyl ether, *Dowano*/® *PnB)* and in particular PPG-2 Methyl Ether (Dipropylene glycol methyl ether, *Dowanol® DPM)* are preferred.

### Bleaches

According to the invention, bleaches can be added to the cleaning composition. Suitable bleaches include peroxides, peracids and/or perborates, particular preference being given to H₂O₂.

### Enzymes

The composition can also comprise enzymes, preferably proteases, lipases, amylases, hydrolases and/or cellulases.

The present invention will hereinafter be explained in more detail with reference to the following Examples, but the present invention is by no means limited to those specific Examples.

### EXAMPLES

### Synthesis of the copolymers of the invention

### General procedure

The polymers of this invention can be produced by solution polymerisation, bulk polymerisation and other common polymerisation methods. As polymerisation solvents, solvents providing a good solubility or good dispersibility to the monomers can be used. Preferably water or mixtures of water and hydrophilic solvents can be used.

In this invention the polymerisation temperature which varies depending on the kind of solvent. The temperature is generally in the range from 30°C to 110°C, more preferably from 50°C to 100°C, and the polymerisation time ranges usually from about 1 hour to 24 hours, preferably 2 hours to 12 hours. As polymerisation initiator various kinds of initiators used for radical polymerisation can be used.

In general the polymerisations are performed under a nitrogen atmosphere.

The composition above may contain one polymer or in combination two or more of them.

The anti-soiling agents are very effective for oil and lipophilic stains like proteins and faeces, as e.g. shown below for artificial faeces soil.

### Evaluation methods for the soil removal performance

### Preparation of artificial faeces

The preparation of artificial faeces is carried out as described in the earlier, still unpublished German patent application DE 10357232.5 in the following manner:
(a) microorganisms of the species *E. coli* were cultured and propagated in a culture medium containing soy bean meal, until a bacteria count of approximately 4 X 10⁹ in 1 ml of the medium was reached,
(b) the biomass was harvested by centrifugation and inactivated by autoclaving,
(c) the absence of fertile *E. coli* was tested by plating on a tetracycline containing medium,
(d) 100 parts by weight of the biomass were mixed with 49.5 parts by weight of vegetable cell wall material, 33 parts by weight glycerine and 61.5 parts by weight of phosphate buffered saline in portions, to give a homogenous mass with a viscosity from dropping to doughy, showing a spreadable consistency.

### Method A

1 ml of 1% aqueous solution of the polymer of the invention was spread on a ceramic tile (obtainable from Villeroy & Boch) of 15 X 15 cm². After 30 min drying at room temperature, 100 µl artificial faeces soil was applied to the polymer coated surface from a height of about 2 cm with a pipette.

The soil removal performance of the polymer coating was evaluated by the number of rinsing cycles that were required to remove more than 90% of the model soil. At each rinsing cycle the soiled tile was rinsed homogeneously by 1 litre of water in 6 s applied from a height of about 20 cm. The plane of the ceramic tile was tilted by 45 degree with respect to the water jet. The soil removal performance of the polymer coating was classified in three levels as follows.
- level 0:: The soil remains on the surface (comparable to the unmodified ceramic surface)
- level 1:: The soil is removed after the 3^{rd} rinsing cycle
- level 2:: The soil is removed after the 1^{st} rinsing cycle

### Method B

15 ml of 5% aqueous solution of the polymer was spread on the inside rim of a pre-cleaned, rinsed and dried toilet bowl. After 2 hours drying at room temperature, 100 µl artificial faeces soil was applied to a 45-degree curved part of the polymer coated inside rim.

The soil removal performance of the polymer coating was evaluated by the number of toilet flushes that were required to remove more than 90% of the model soil. At each toilet flush the soiled toilet was rinsed with about 9 litres of water. The soil removal performance of the polymer coating was classified in three levels as follows.
- level 0:: The soil remains on the surface (comparable to the unmodified inside rim of the toilet bowl)
- level 1:: The soil is removed after the 3^{rd} flush
- level 2:: The soil is removed after the 1^{st} flush

### Examples 5 to 8 (Table 1)

Table 1 shows the composition of a copolymer according to the invention, and comparative compositions (marked with an asterisk "*"), whereby the amount of monomers is expressed in weight percent. Table 1 further shows the soil removal performance of the polymer coatings determined according to Methods A and B.

The following monomers have been used for the synthesis of the copolymers of Table 1:

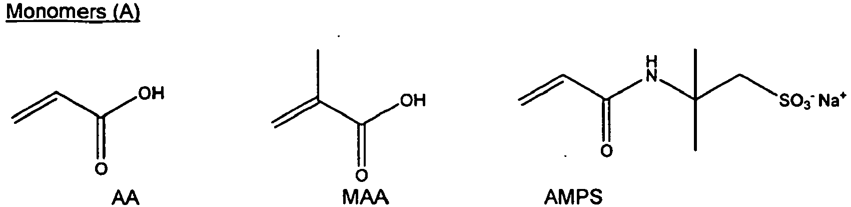

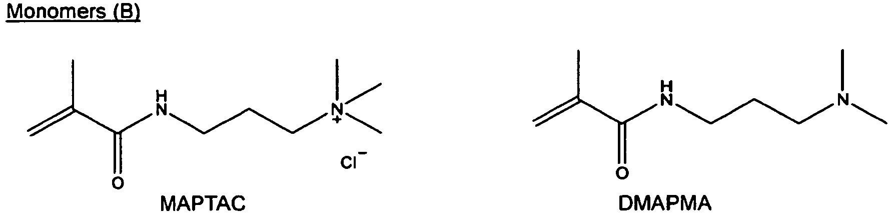

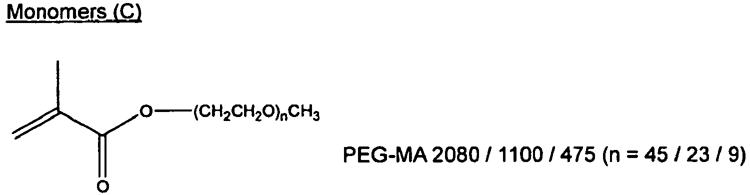

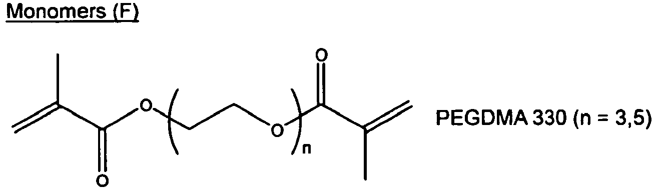

**Table 1: composition and soil removal performance of polymers**

| Example and Comp. Example No. | polymer composition | | | | | | | | | soil removal performance | |
|---|---|---|---|---|---|---|---|---|---|---|---|
| | monomer (A) | | | monomer (B) | | monomer (C) | | | monomer (F) | | |
| | AA | MAA | AMPS | MAPTAC | DMAPMA | PEG-MA 2080 | PEG-MA 1100 | PEG-MA 475 | PEG DMA 330 | method A | method B |
| 5* | - | 8.3 | 79.2 | - | - | 12.5 | - | - | - | 0 | 1 |
| 6* | - | 3.3 | 31.4 | 60.4 | - | 5.0 | - | - | - | 0 | 1 |
| 7 | - | - | 84.5 | - | 1.7 | 13.3 | - | - | 0.4 | 2 | not tested |
| 8* | - | - | 7.4 | 70.4 | - | 22.2 | - | - | - | 0 | not tested |

| | | | | | | | | | | | |
|---|---|---|---|---|---|---|---|---|---|---|---|
| Comparative Examples are marked with an asterisk "* | | | | | | | | | | | |

### Further Examples and Evaluation Methods

### Water layer forming ability of the copolymers of the invention

1 ml of 1% aqueous solution of the polymer was applied on a tile (surface area : 100 cm²). After the solution was spread out by using Kimwipe, the treated tile surface was washed by using tap water of 10 ml/sec flow rate for 10 sec and was dried at ambient temperature. Subsequently, the treated tile was vertically dipped in tap water to half height of the tile. After 10 sec, the tile was pulled up from the water. Then, the upper edge of the water layer began to flow downwards on the tile surface and was observed until the level reached to 1 cm lower than the beginning. The time was measured as the parameter of water holding ability of the polymer on the tile surface. The longer the time, the greater the water layer forming ability.

The time was classified into three levels as follows:
3 : more than four minutes
2 : two minutes to four minutes
1 : less than two minutes

### Anti-soiling effects of the copolymers of the invention

- Model soil (a) :: artificial faeces (as described above and in DE 10357232.5)
- Model soil (b) :: Mixture of wheat flour (10wt%), vegetable oil (20%), butter
(10wt%), lard (5%), egg(5%), benzoic acid (15%), sodium carbonate (0.7%), oleic acid (0.2%), and de-ionized water (10%)

### Test 1.

### 1. Preparation of test tile

A tile (10cmx10cm) was washed by using a cleaner (Look, Lion Corporation) to remove stain, and was rinsed with water three times, and then dried in ambient temperature for 15 minutes. On the tile, 1 ml of a 1% aqueous solution of the polymer was applied to the tile, followed by drying for 30 minutes.

### 2. Evaluation method for soil release effect.

100 mg of model soil (a) was adhered on the tile by spatula, the tile surface was rinsed with water flush with 120 ml/sec flow rate for 10 seconds, and the tile surface was watched to evaluate the soil release effect. The tile was dried for 30 minutes and then the soil was applied on the tile surface again, followed by rinsing with water flush of 120ml/sec. The process was repeated till all of the soil was removed from the tile. The number of repetitions indicates the durability of the soil release effect.

The durability was classified into three levels as follows:
3 : number of repetition more than 10 times
2 : 9 times to 5 times
1 : 4 times to 1 times
0 : no durability

### Test 2

A sink made of stainless steel was used for the evaluation. On the square of the stainless steel (33cmx50cm) of the bottom of the sink, 1ml of polymer solutions (concentration of each solution is shown in Table 4) were coated followed by drying to obtain polymer film on the stainless steel. On the dried surface, 1 g of model soil (b) was applied, and allowed to stand for one hour. Then, from 5 cm height from the stainless steel, tap water was passed over the surface of the stainless steel with 100 ml/sec flow rate for 30 minutes to evaluate the soil release effect.

The effect was classified into three levels as follows:
3 : No soil remained on the surface of the stainless steel.
2 : A part of the soil still remained on the stainless steel.
1 : All of the soil remained on the stainless steel.

### Molecular weight measurements

Molecular weight measurement of the polymers of the following examples was carried by using light scattering method as follows.

Concentration of polymer solutions: 0.02wt%, 0.04wt%, 0.06wt%, 0.08wt%, and 1.0wt%. Equipment: MALLS detector: Dawn DSP-F ( Wyatt Technology Corporation). The monomer ratio of the polymers of Examples and Comparable Examples are shown in Table 3.

### Example 24

70 g of deionized water and 30 g of ethanol were mixed at 80 °C for 30 minutes under an atmosphere of N₂ in a three necked flask equipped with a mechanical stirrer, a reflux condenser, thermometer, and a nitrogen inlet tube. 2-Methyl-2-acrylamidopropane sulfonic acid, AMPS (23.4 g), methacrylic acid, MAA (2.16 g), N,N-dimethylaminopropylacrylamide, AAPTAC (23.34 g), tert-butyl methacrylate, t-BMA (1 g), polyethylene glycol (p=9) diacrylate, PEG400DA (0.1 g), sodium hydroxide (4.76 g) were dissolved in deionized water (42 g) and ethanol (18 g). Sodium persulfate (0.6 g) was dissolved in deionized water (28 g) and ethanol (12 g). The monomer solution and the initiator solution were added dropwise to the reaction flask for 2 hours at 80 °C. After the addition, the reaction mixture was stirred for 4 hours at 80 °C. The resulting polymer was precipitated by using hexane, and 51 g of the polymer were obtained as solid. Molecular weight of the polymer was 1,200,000.

By using the polymer solution, the water film forming ability and the soil releasing effects were evaluated. The results are shown in Table 4.

### Examples 25 and 26

By using monomers described in Table 3, Polymer 2 and Polymer 3 were obtained by the polymerisation method of example 24. By using 2 wt-% Polymer 2 solution, and 3 wt-% of Polymer 3 solution, their anti-soiling effects were evaluated. The results are shown in Table 4.

### Example 27

9.5g of AMPS, 0.25g of PEG400DA, 1.85g of NaOH and 0.06g of sodium persulfate were dissolved in deionized water (95 g) under an atmosphere of N₂ at 80 °C for 15 minutes in a flask equipped with a mechanical stirrer, a reflux condenser, thermometer, and a nitrogen inlet tube. Then, to the reaction flask, mixed monomer solution (AMPS (19 g), trimethylmethacryloxyethyl ammonium chloride, DMC (19 g), PDMS1 (4 g), methoxypolyethyleneoxy (p=4) methacrylate, M40G (0.25 g), NaOH (3.59 g) and deionized water (69.75 g)) and initiator solution (sodium persulfate (0.49 g) and deionized water (35.6 g)) were added dropwise with stirring for 2 hours at 80 °C. The polymer was precipitated from the reaction mixture by using hexane. The molecular weight of the polymer was 5,000,000. The anti-soil property of the polymer was evaluated. The results are shown in Table 4.

### Example 30, and Comparative Example 38*

By using monomers described in Table 3, Polymer 7 and Polymer 14 and Polymer 16 were obtained by the polymerisation method of example 24. By using those polymer solutions, the anti-soiling effects of the polymers were evaluated. The results are shown in Table 4.

### Examples 28, 34, 35 and 36 and Comparative Examples 37* and 39*

By using monomers described in Table 3, and using only water as solvent, Polymer 5 and Polymer 11, Polymer 12, Polymer 13, Polymer 15, Polymer 17, and Polymer 18 were obtained by the polymerisation method of example 24. By using those polymer solutions, the anti-soiling effects of the polymers were evaluated. The results are shown in Table 4.

### Examples 29, 31, 32 and 33

By using monomers described in Table 3, Polymer 6 and Polymer 8, Polymer 9, and Polymer 10 were obtained by the polymerisation method of example 27. By using those polymer solutions, the anti-soiling effects of the polymers were evaluated. The results are shown in Table 4.

### Comparative examples 40* and 41*

By using polymer solution of polyacrylic acid (AC-10H, Nihon Junyaku: the molecular weight 150000-2000000) and deionized water, water layer forming ability, soil release effects were evaluated as comparable examples. The results are shown in Table 4.

**Table 3**

| Example and Comp. Example No. | Composition of the polymers | | | | | |
|---|---|---|---|---|---|---|
| 24 | AMPS | MAA | AAPTAC | t-BMA | PEG400DA | |
| | 46.8 | 4.3 | 46.7 | 2 | 0.2 | |
| 25 | MAA | DMC | t-BMA | PEG400DA | M40G | |
| | 41.8 | 43.2 | 12 | 1 | 2 | |
| 26 | AMPS | MAA | AAPTAC | PDMS1 | PEG400DA | |
| | 41.6 | 1.9 | 46.3 | 10 | 0.2 | |
| 27 | AMPS | DMC | PDMS1 | PEG400DA | M40G | |
| | 57 | 38 | 4 | 0.5 | 0.5 | |
| 28 | AMPS | MAPTAC | t-BMA | PEG400DA | | |
| | 55.6 | 39.4 | 4 | 1 | | |
| 29 | AMPS | MAA | AAPTAC | t-BMA | PEG400DA | |
| | 46.7 | 4.3 | 46.5 | 2 | 0.5 | |
| 30 | MAA | DMC | t-BMA | PEG400DA | | |
| | 46.2 | 47.8 | 5 | 1 | | |
| 31 | AMPS | AAPTAC | t-BMA | PEG400DA | | |
| | 47.6 | 47.4 | 4.5 | 0.5 | | |
| 32 | AMPS | MAA | AAPTAC | PDMS1 | PEG400DA | |
| | 46.7 | 4.35 | 46.7 | 2 | 0.25 | |
| 33 | AMPS | MAA | LMAS | AAPTAC | PDMS1 | PEG400DA |
| | 37.3 | 1.9 | 9.7 | 46.6 | 4 | 0.5 |
| 34 | LMAS | MAA | AAPTAC | 2EHMA | PEG400DA | |
| | 51.8 | 1.5 | 42.7 | 3 | 1 | |
| 35 | AMPS | AAPTAC | t-BMA | PEG400DA | | |
| | 47.6 | 47.4 | 4 | 1 | | |
| 36 | AMPS | DMC | DADMAC | t-BMA | PEG400DA | |
| | 53.2 | 10.6 | 33.2 | 2 | 1 | |
| 37* | MAA | DMEMA | | | | |
| | 4.4 | 95.6 | | | | |
| 38* | MAA | DMC | MMA | PEG400DA | | |
| | 2.2 | 47.8 | 45 | 5 | | |
| 39* | MAA | DMEMA | HA | | | |
| | 42.8 | 52.2 | 5 | | | |
| 40* | AA | | | | | |
| | 100 | | | | | |
| 41* | - | | | | | |
| | - | | | | | |

| | | | | | | |
|---|---|---|---|---|---|---|
| Comparative Examples are marked with an asterisk « * » | | | | | | |

**Table 4**

| | | | | | | | | |
|---|---|---|---|---|---|---|---|---|
| | Example No. | 24 | 25 | 26 | 27 | 28 | 29 | 30 |
| | Polymer No. | 1 | 2 | 3 | 4 | 5 | 6 | 7 |
| | Polymer conc. (wt. %) | 2 | 5 | 3 | 0.5 | 0.5 | 1 | 0.5 |
| Evaluation results | Test 1 | 2 | 2 | 3 | 2 | 2 | 2 | 2 |
| | Test 2 | 3 | 3 | 3 | 3 | 3 | 3 | 3 |
| | Water film forming ability | 3 | 3 | 3 | 3 | 3 | 3 | 3 |
| | Example No. | 31 | 32 | 33 | 34 | 35 | 36 | |
| | Polymer No. | 8 | 9 | 10 | 11 | 12 | 13 | |
| | Polymer conc. (wt.%) | 0.5 | 0.5 | 1 | 0.5 | 2 | 8 | |
| Evaluation results | Test 1 | 2 | 3 | 2 | 2 | 2 | 2 | |
| | Test 2 | 3 | 3 | 3 | 3 | 3 | 3 | |
| | Water film forming ability | 3 | 3 | 3 | 3 | 3 | 3 | |
| | Comp. Example No. | 37* | 38* | 39* | 40* | 41* | | |
| | Polymer No. | 1 | 2 | 3 | 5 | - | | |
| | Polymer conc. (wt.%) | 7 | 6 | 1 | 3 | 0 | | |
| Evaluation results | Test 1 | 1 | 1 | 0 | 0 | 0 | | |
| | Test 2 | 1 | 1 | 1 | 1 | 1 | | |
| | Water film forming ability | 1 | 1 | 2 | 1 | 1 | | |

## Claims

1. A copolymer consisting of the following amounts of copolymerised ethylenically unsaturated monomers:
5 to 99 weight-% of one or more anionic vinyl monomers (A):
0.01 to 50 weight-% of one or more vinyl monomers (B) comprising a quaternary ammonium group or tertiary amino group;
optionally, 0.5 to 80 weight-% of one or more nonionic hydrophilic vinyl monomers (C);
0.1 to 15 weight-% of one or more polyfunctional vinyl monomers (F) of the general formula (IX), 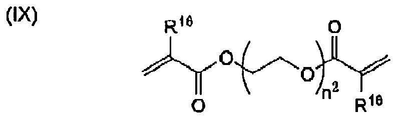
wherein R¹⁸ represents a hydrogen or an alkyl group having one or two carbon atoms and n² represents a number of 1 to 20;
0 to 30 weight-% of one or more hydrophobic vinyl monomers (D); and
0 to 20 weight-% of one or more vinyl monomers (E) containing silicone moieties; wherein the sum of the monomers (A), (B), (C), (D), (E) and (F) is 100 % by weight.

2. The copolymer according to claim 1, wherein the copolymer has a number average molecular weight from 10,000 to 1,000,000 g/mol.

3. The copolymer according to any of claims 1 or 2, wherein the anionic vinyl monomer (A) is selected from the group consisting of acrylic acid (AA); methacrylic acid (MAA); a monomer of general formula (I) 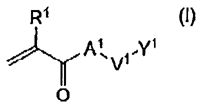
wherein R¹ represents a hydrogen or an alkyl group having one or two carbon atoms,
Y¹ represents a sulfonic acld group or sulfonate, A¹ represents an oxygen atom or NH, and V¹ represents a linear or branched alkylene group having 1 to 15 carbon atoms, or an unsaturated hydrocarbon chain having 2 to 15 carbon atoms; and a monomer of formula (II) 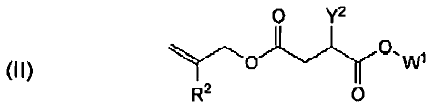
wherein R² represents a hydrogen or an alkyl group having one or two carbon atoms, Y² represents a sulfonic acid group or sulfonate, W¹ represents a linear or branched alkylene group with 1 to 20 carbon atoms, an alicyclic alkyl group or a linear alkylene group with 2 to 20 carbon atoms or a branched alkylene chain or an alicyclic alkenyl group,
or any alkali salts, ammonium salts, monoethanolamine salts and triethylamine salt thereof.

4. The copolymer according to any one of claims 1 to 3, wherein the anionic vinyl monomer (A) is selected from the group consisting of 2-acrylamide-2-methylpropansulfonic acid (AMPS), methacrylic acid (MAA) and acrylic acid (AA).

5. The copolymer according to any one of claims 1 to 4, wherein the vinyl monomer comprising a quaternary ammonium group or a tertiary amino group (B) is selected from the group consisting of a monomer of general formula (III) 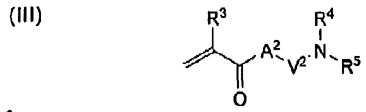 wherein, R³ represents a hydrogen or an alkyl group having 1 or 2 carbon atoms, A² represents an oxygen or NH, V² represents a linear alkyl or branched alkylene group having 1 to 15 carbon atoms or a linear or branched unsaturated alkenylene group having 2 to 15 carbon atoms and R⁴ or R⁵ represent an alkyl group having one or two carbon atoms, whereby R⁴ and R⁵ are same or different;
a monomer of general formula (IV) 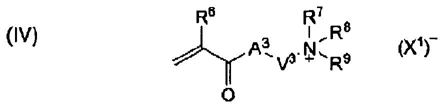 wherein R⁶ represents a hydrogen or an alkyl group having 1 or 2 carbon atoms, A³ represents an oxygen or NH, V³ represents a linear alkyl or branched alkylene group having 1 to 15 carbon atoms or a linear or branched unsaturated alkenylene group having 2 to 15 carbon atoms, X¹ represents a counter anion, R⁷, R⁸ and R⁹ represent an alkyl group having one or two carbon atoms, and R⁷, R⁸ and R⁹ are the same or different; and
a monomer of general formula (V) 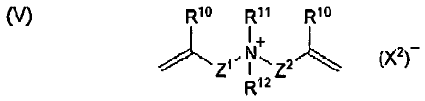 wherein R¹⁰ represents a hydrogen or an alkyl group having 1 or 2 carbon atoms, R¹¹ and R¹² represent an alkyl group having one or two carbon atoms, and R¹¹ and R¹² are the same or different, X² represents a counter Ion, and Z¹ and Z² represent linear alkylene groups having 1 to 3 carbon atoms, whereby Z¹ and Z² are same or different and wherein the residues R¹⁰ are same or different.

6. The copolymer according to any of claims 1 to 5, wherein the vinyl monomer comprising a quaternary ammonium group or a tertiary amino group (B) is selected from the group consisting of methacryl-amidopropyl trimethylammonium chloride (MAPTAC), acrylamidopropyl trimethyammonium chloride (AAPTAC), dimethylaminoethyl methacrylate (DM), methacryloxy-aminoethyl trimethylammonium chloride (DMC), dimethylaminopropyl acrylamide (DMAPAA), dimethylaminopropyl methacrylamide (DMAPMAA).

7. The copolymer according to any one of claims 1 to 6, wherein the hydrophilic vinyl monomer (C) is a monomer of general formulas (VI) 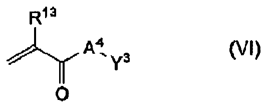 wherein R¹³ represents a hydrogen or an alkyl group having 1 or 2 carbon atoms, A⁴ represents an oxygen atom or NH, Y³ represents [(CH₂)ₘ₁O]ₙ₁B¹, wherein B¹ represents a hydrogen or an alkyl group with 1 or 2 carbon atoms, m¹ is 2 to 4 and n¹ is 1 to 60 and wherein, within the n¹ [(CH₂)ₘ₁O] groups the value of m¹ is same or different for each group.

8. The copolymer according to claim 7, wherein R¹³ and B¹ represent a methyl group, A⁴ represents an oxygen, m¹ = 2 and n¹ is 9, 23 or 45.

9. The copolymer according to any one of claims 1 to 8, wherein the hydrophobic vinyl monomer (D) is a monomer of general formula (VII) 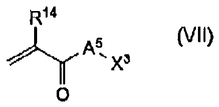 wherein R¹⁴ represents a hydrogen or an alkyl group having 1 or 2 carbon atoms, A⁵ represents an oxygen atom or NH, and X³ represents a linear or branched alkyl group having 1 to 15 carbon atoms, or a linear or branched alkenyl group having 1 to 15 carbon atoms.

10. The copolymer according to any one of claims 1 to 9, wherein the vinyl monomers containing the silicone moieties (E) are monomers of general formula (VIII) 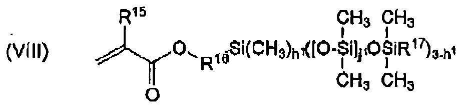 wherein R¹⁶ represents a hydrogen or an alkyl group having 1 or 2 carbon atoms, and R¹⁶ represents an alkyl group of 1 to 6, preferably 1 to 4 carbon atoms, having ether group, R¹⁷ represents an alkyl group having 1 to 30, preferably 1 to 22 carbon atoms, or a fluorinated alkyl group having 1 to 22 carbon atoms and wherein h¹ is 1 or 2, and j¹ is 0 to 500, preferably 0 to 300.

11. The copolymer according to any one of claims 1 to 10, wherein the amounts of copolymerised ethylenically unsaturated monomers are as follows: 30 to 95 weight-% of one or more anionic vinyl monomers (A);
0.05 to 30 weight-% of one or more vinyl monomers (B) comprising a quatemary ammonium group or tertiary amino group; and
0.1 to 5 weight-% of one or more polyfunctional vinyl monomers (F);
wherein the sum of the monomers (A), (B), (F), and the optionally present monomers (C), (D) and (E) is 100 % by weight.

12. The copolymer according to any one of claims 1 to 11, wherein the amounts of copolymerised ethylenically unsaturated monomers are as follows: 35 to 95 weight-% of one or more anionic vinyl monomers (A);
1 to 9 weight-% of one or more vinyl monomers (B) comprising a quaternary ammonium group or tertiary amino group; and
0.1 to 2 weight-% of one or more polyfunctional vinyl monomers (F);
wherein the sum of the monomers (A), (B), (F) and the optionally present monomers (C), (D) and (E) is 100 % by weight.

13. The copolymer according to any one of claims 1 to 12, wherein all monomers are monoethylenically unsaturated.

14. Use of any one or more of the copolymers of claims 1 to 13 as anti-soil agent and/or surface-treatment agent.

15. An aqueous cleaning composition comprising:
0.1 to 10 weight-% of one or more of the copolymers according to claims 2 to 8;
0 to 10 weight-% of one or more polyethylene glycols having a number average molecular weight of 200 to 600,000 g/mol, preferably 10,000 to 200,000 g/mol;
0 to 10 weight-% of one or more surfactants, preferably anionic or nonionic surfactants;
0 to 10 weight-% of thickeners;
0 to 80 weight-% organic solvents;
0 to 10 weight-% of one or more complexing agents or builders;
0 to 10 weight-% of an inorganic or organic acid;
0 to 10 weight-% of fragrances; and
0 to 10 weight-% of colorants.

16. The aqueous cleaning composition according to claim 15 comprising:
0.5 to 5 weight-%, preferably 1 to 3 weight-% of one or more of the copolymers according to claims 2 to 8:
0.1 to 6 weight-% of one or more polyethyleneglycols having a number average molecular weight of 200 to 600,000 g/mol, preferably 10.000 to 200,000 g/mol;
0.1 to 3 weight-% of one or more surfactants, preferably anionic or nonionic surfactants;
0 to 10 weight-% of thickeners;
0.1 to 5 weight-% organic solvents;
0.1 to 3 weight-% of one or more complexing agents or builders;
0.2 to 5 weight-% of an inorganic or organic acid;
0.01 to 1 weight-% of fragrances; and
0.01 to 1 weight-% of colorents.

17. The aqueous cleaning composition according to claims 15 and 16, wherein the surfactants are selected from the group consisting of alkyl polyglycosides, like C₈₋₁₀-alkyl 1.5-glucoside; sodium laurylethersulfate; and sodium lauryl sulfate; wherein the solvent is selected from the group consisting of alkanol, propylene glycols, glycolethers and benzine; wherein the builder is selected from the group consisting of sodium citrate, sodium carbonate and phosphonates; wherein the thickener is selected from the group consisting of polysaccharides, substituted celluloses like hydroxypropylmethyl cellulose, poly(meth)acrylates, guar gum and xanthane derivatives like xanthan gum; and wherein the acid is selected from the group consisting of citric acid, formic acid, lactic acid and amidosulfonic acid.

18. The aqueous cleaning composition according to claims 15 to 17, comprising a pH value of 0 to 7, preferably 1 to 4.

19. Use of the cleaning compositions according to any of claims 16 to 18, for anti-soiling and/or cleaning and/or surface-treating hard surfaces, in particular hard surfaces of sanitary ware.

20. Method of making copolymers by copolymerising the ethylenically unsaturated monomers:
5 to 99 weight-% of one or more anionic vinyl monomers (A);
0.01 to 50 weight-% of one or more vinyl monomers (B) comprising a quaternary ammonium group or tertiary amino group;
optionally, 0.5 to 80 weight-% of one or more nonionic hydrophilic vinyl monomers (C);
0.1 to 15 weight-% of one or more polyfunctional vinyl monomers (F) of the general formula (IX);
0 to 30 weight-% of one or more hydrophobic vinyl monomers (D); and
0 to 20 weight-% of one ore more vinyl monomers (E) containing silicone moieties;
wherein the sum of the monomers (A), (B), (C), (D), (E) and (F) is 100 % by weight, in a solvent, wherein the monomers (A), (B), (C), (D), (E) and (F) are soluble or dispersible, In the presence of a polymerisation Initiator.

21. The method according to claim 20, whereby the copolymerisatlon is carried out at a temperature of 30 to 110 °C under an inert gas atmosphere.

22. The method according to any of claims 20 and 21, wherein the solvent is water or an aqueous mixture with hydrophilic solvents.

## Patentansprüche

1. Copolymer, das aus den folgenden Mengen copolymerisierter ethylenisch ungesättigter Monomere besteht:
5 bis 99 Gew.-% eines oder mehrerer anionischer Vinylmonomere (A);
0,01 bis 50 Gew.-% eines oder mehrerer Vinylmonomere (B), die eine quartäre Ammoniumgruppe oder eine tertiäre Aminogruppe umfassen;
gegebenenfalls 0,5 bis 80 Gew.-% eines oder mehrerer nichtionischer hydrophiler Vinylmonomere (C);
0,1 bis 15 Gew.-% eines oder mehrerer polyfunktionaler Vinylmonomere (F) der allgemeinen Formel (IX), 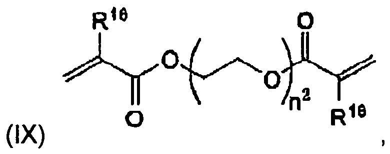
wobei R¹⁸ für einen Wasserstoff oder eine Alkylgruppe mit ein oder zwei Kohlenstoffatomen steht und n² für eine Zahl von 1 bis 20 steht;
0 bis 30 Gew.-% eines oder mehrerer hydrophober Vinylmonomere (D) und
0 bis 20 Gew.-% eines oder mehrerer Vinylmonomere (E), die Silikoneinheiten enthalten;
wobei die Summe der Monomere (A), (B), (C), (D), (E) und (F) 100 Gew.-% ist.

2. Copolymer nach Anspruch 1, wobei das Copolymer ein zahlenmittleres Molekulargewicht von 10.000 bis 1.000.000 g/mol aufweist.

3. Copolymer nach einem der Ansprüche 1 oder 2, wobei das anionische Vinylmonomer (A) aus der Gruppe bestehend aus Acrylsäure (AA); Methacrylsäure (MAA); einem Monomer der allgemeinen Formel (I): 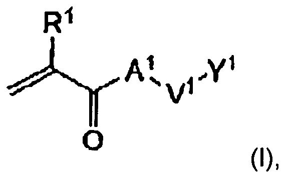 wobei R¹ für einen Wasserstoff oder eine Alkylgruppe mit ein oder zwei Kohlenstoffatomen steht, Y¹ für eine Sulfonsäuregruppe oder Sulfonat steht, A¹ für ein Sauerstoffatom oder NH steht und V¹ für eine lineare oder verzweigte Alkylengruppe mit 1 bis 15 Kohlenstoffatomen oder eine ungesättigte Kohlenwasserstoffkette mit 2 bis 15 Kohlenstoffatomen steht; und einem Monomer der Formel (II): 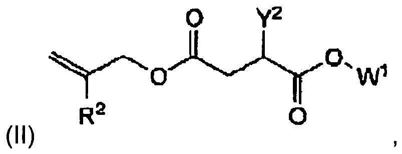 wobei R² für einen Wasserstoff oder eine Alkylgruppe mit ein oder zwei Kohlenstoffatomen steht, Y² für eine Sulfonsäuregruppe oder Sulfonat steht, W¹ für eine lineare oder verzweigte Alkylengruppe mit 1 bis 20 Kohlenstoffatomen, eine alicyclische Alkylgruppe oder lineare Alkylengruppe mit 2 bis 20 Kohlenstoffatomen oder eine verzweigte Alkylenkette oder eine alicyclische Alkenylgruppe steht,
oder beliebigen Alkalisalzen, Ammoniumsalzen und Monoethanolaminsalzen und einem beliebigen Triethylaminsalz davon ausgewählt ist.

4. Copolymer nach einem der Ansprüche 1 bis 3, wobei das anionische Vinylmonomer (A) aus der Gruppe bestehend aus 2-Acrylamido-2-methylpropansulfonsäure (AMPS), Methacrylsäure (MAA) und Acrylsäure (AA) ausgewählt ist.

5. Copolymer nach einem der Ansprüche 1 bis 4, wobei das Vinylmonomer, das eine quartäre Ammoniumgruppe oder eine tertiäre Aminogruppe umfasst (B), aus der Gruppe bestehend aus einem Monomer der allgemeinen Formel (III): 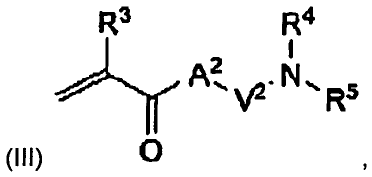 wobei R³ für einen Wasserstoff oder eine Alkylgruppe mit 1 order 2 Kohlenstoffatomen steht, A² für einen Sauerstoff oder NH steht, V² für eine lineare Alkylgruppe oder verzweigte Alkylengruppe mit 1 bis 15 Kohlenstoffatomen oder eine lineare oder verzweigte ungesättigte Alkenylengruppe mit 2 bis 15 Kohlenstoffatomen steht und R⁴ oder R⁵ für eine Alkylgruppe mit ein oder zwei Kohlenstoffatomen steht, wobei R⁴ und R⁵ gleich oder verschieden sind;
einem Monomer der allgemeinen Formel (IV): 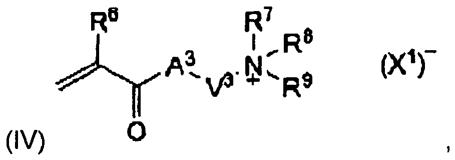 wobei R⁶ für einen Wasserstoff oder eine Alkylgruppe mit 1 oder 2 Kohlenstoffatomen steht, A³ für einen Sauerstoff oder NH steht, V³ für eine lineare Alkylgruppe oder verzweigte Alkylengruppe mit 1 bis 15 Kohlenstoffatomen oder eine lineare oder verzweigte ungesättigte Alkenylengruppe mit 2 bis 15 Kohlenstoffatomen steht, X¹ für ein Gegenanion steht, R⁷, R⁸ und R⁹ für eine Alkylgruppe mit ein oder zwei Kohlenstoffatomen stehen und R⁷, R⁸ und R⁹ gleich oder verschieden sind; und
einem Monomer der allgemeinen Formel (V): 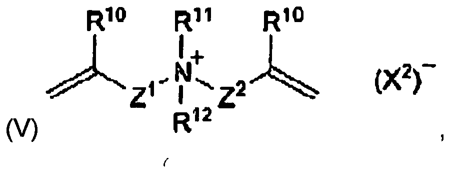 wobei R¹⁰ für einen Wasserstoff oder eine Alkylgruppe mit 1 oder 2 Kohlenstoffatomen steht, R¹¹ und R¹² für eine Alkylgruppe mit ein oder zwei Kohlenstoffatomen stehen und R¹¹ und R¹² gleich oder verschieden sind, X² für ein Gegenanion steht und Z¹ und Z² für lineare Alkylengruppen mit 1 bis 3 Kohlenstoffatomen stehen, wobei Z¹ und Z² gleich oder verschieden sind, und wobei die Reste R¹⁰ gleich oder verschieden sind, ausgewählt ist.

6. Copolymer nach einem der Ansprüche 1 bis 5, wobei das Vinylmonomer, das eine quartäre Ammoniumgruppe oder eine tertiäre Aminogruppe umfasst (B), aus der Gruppe bestehend aus Methacrylamidopropyltrimethylammoniumchlorid (MAPTAC), Acrylamidopropyltrimethylammoniumchlorid (AAPTAC), Dimethylaminoethylmethacrylat (DM), Methacryloxyaminoethyltrimethylammoniumchlorid (DMC), Dimethylaminopropylacrylamid (DMAPAA) und Dimethylaminopropylmethacrylamid (DMAPMAA) ausgewählt ist.

7. Copolymer nach einem der Ansprüche 1 bis 6, wobei das hydrophile Vinylmonomer (C) ein Monomer der allgemeinen Formel (VI) ist: 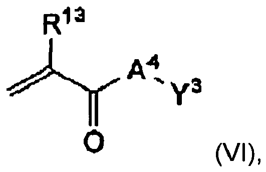 wobei R¹³ für einen Wasserstoff oder eine Alkylgruppe mit 1 oder 2 Kohlenstoffatomen steht, A⁴ für ein Sauerstoffatom oder NH steht, Y³ für [(CH₂)m₁O)n₁B¹ steht, wobei B¹ für einen Wasserstoff oder eine Alkylgruppe mit 1 oder 2 Kohlenstoffatomen steht, m¹ 2 bis 4 ist und n¹ 1 bis 60 ist und wobei innerhalb der n¹ [(CH₂)ₘ₁O]-Gruppen der Wert von m¹ für jede Gruppe gleich oder verschieden ist.

8. Copolymer nach Anspruch 7, wobei R¹³ und B¹ für eine Methylgruppe stehen, A⁴ für einen Sauerstoff steht, m¹ = 2 und n¹ 9, 23 oder 45 ist.

9. Copolymer nach einem der Ansprüche 1 bis 8, wobei das hydrophobe Vinylmonomer (D) ein Monomer der allgemeinen Formel (VII) ist: 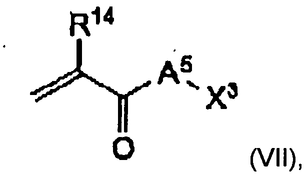 wobei R¹⁴ für einen Wasserstoff oder eine Alkylgruppe mit 1 oder 2 Kohlenstoffatomen steht, A⁵ für ein Sauerstoffatom oder NH steht und X³ für eine lineare oder verzweigte Alkylgruppe mit 1 bis 15 Kohlenstoffatomen oder eine lineare oder verzweigte Alkenylgruppe mit 1 bis 15 Kohlenstoffatomen steht.

10. Copolymer nach einem der Ansprüche 1 bis 9, wobei die Vinylmonomere, die die Silikoneinheiten enthalten (E), Monomere der allgemeinen Formel (VIII) sind: 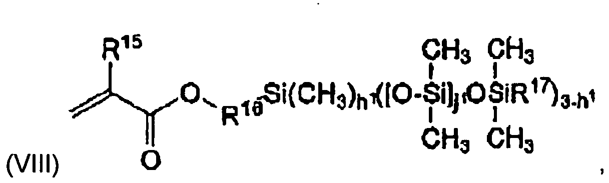 wobei R¹⁵ für einen Wasserstoff oder eine Alkylgruppe mit 1 oder 2 Kohlenstoffatomen steht und R¹⁶ für eine Alkylgruppe von 1 bis 6, vorzugsweise 1 bis 4 Kohlenstoffatomen mit einer Ethergruppe steht, R¹⁷ für eine Alkylgruppe mit 1 bis 30, vorzugsweise 1 bis 22 Kohlenstoffatomen oder eine fluorierte Alkylgruppe mit 1 bis 22 Kohlenstoffatomen steht und wobei h¹ 1 oder 2 ist und j¹ 0 bis 500, vorzugsweise 0 bis 300 ist.

11. Copolymer nach einem der Ansprüche 1 bis 10, wobei die Mengen copolymerisierter ethylenisch ungesättigter Monomere wie folgt sind:
30 bis 95 Gew.-% eines oder mehrerer anionischer Vinylmonomere (A);
0,05 bis 30 Gew.-% eines oder mehrerer Vinylmonomere (B), die eine quartäre Ammoniumgruppe oder eine tertiäre Aminogruppe umfassen; und
0,1 bis 5 Gew.-% eines oder mehrerer polyfunktionaler Vinylmonomere (F);
wobei die Summe der Monomere (A), (B), (F) und der gegebenenfalls vorhandenen Monomere (C), (D) und (E) 100 Gew.-% ist.

12. Copolymer nach einem der Ansprüche 1 bis 11, wobei die Mengen copolymerisierter ethylenisch ungesättigter Monomere wie folgt sind:
35 bis 85 Gew.-% eines oder mehrerer anionischer Vinylmonomere (A);
1 bis 9 Gew.-% eines oder mehrerer Vinylmonomere (B), die eine quartäre Ammoniumgruppe oder eine tertiäre Aminogruppe umfassen; und
0,1 bis 2 Gew.-% eines oder mehrerer polyfunktionaler Vinylmonomere (F);
wobei die Summe der Monomere (A), (B), (F) und der gegebenenfalls vorhandenen Monomere (C), (D) und (E) 100 Gew.-% ist.

13. Copolymer nach einem der Ansprüche 1 bis 12, wobei alle Monomere monoethylenisch ungesättigt sind.

14. Verwendung eines oder mehrerer beliebiger der Copolymere nach den Ansprüchen 1 bis 13 als schmutzabweisendes Mittel und/oder Oberflächenbehandlungsmittel.

15. Wässrige Reinigungszusammensetzung, die Folgendes umfasst:
0,1 bis 10 Gew.-% eines oder mehrerer der Copolymere nach den Ansprüchen 2 bis 8;
0 bis 10 Gew.-% eines oder mehrerer Polyethylenglycole mit einem zahlenmittleren Molekulargewicht von 200 bis 600.000 g/mol, vorzugsweise 10.000 bis 200.000 g/mol;
0 bis 10 Gew.-% eines oder mehrerer Tenside, vorzugsweise anionischer oder nichtionischer Tenside;
0 bis 10 Gew.-% Verdickungsmittel;
0 bis 80 Gew.-% organische Lösungsmittel;
0 bis 10 Gew.-% eines oder mehrerer Komplexbildner oder Builder;
0 bis 10 Gew.-% einer anorganischen oder organischen Säure;
0 bis 10 Gew.-% Duftstoffe und
0 bis 10 Gew.-% Farbstoffe.

16. Wässrige Reinigungszusammensetzung nach Anspruch 15, die Folgendes umfasst:
0,5 bis 5 Gew.-%, vorzugsweise 1 bis 3 Gew.-% eines oder mehrerer der Copolymere nach den Ansprüchen 2 bis 8;
0,1 bis 5 Gew.-% eines oder mehrerer Polyethylenglycole mit einem zahlenmittleren Molekulargewicht von 200 bis 600.000 g/mol,m vorzugsweise 10.000 bis 200.000 g/mol;
0,1 bis 3 Gew.-% eines oder mehrerer Tenside, vorzugsweise anionischer oder nichtionischer Tenside;
0 bis 10 Gew.-% Verdickungsmittel;
0,1 bis 5 Gew.-% organische Lösungsmittel;
0,1 bis 3 Gew.-% eines oder mehrerer Komplexbildner oder Builder;
0,2 bis 5 Gew.-% einer anorganischen oder organischen Säure;
0,01 bis 1 Gew.-% Duftstoffe und
0,01 bis 1 Gew.-% Farbstoffe.

17. Wässrige Reinigungszusammensetzung nach den Ansprüchen 15 und 16, wobei die Tenside aus der Gruppe bestehend aus Alkylpolyglycosiden wie C₈-₁₀-Alkyl-1,5-glycosid; Natriumlaurylethersulfat und Natriumlaurylsulfat ausgewählt sind; wobei das Lösungsmittel aus der Gruppe bestehend aus Alkanol, Propylenglycolen, Glycolethern und Benzin ausgewählt ist; wobei der Builder aus der Gruppe bestehend aus Natriumcitrat, Natriumcarbonat und Phosphonaten ausgewählt ist; wobei das Verdickungsmittel aus der Gruppe bestehend aus Polysacchariden, substituierten Cellulosen wie Hydroxypropylmethylcellulose, Poly(meth)acrylaten, Guargummi und Xanthanderivaten wie Xanthangummi ausgewählt ist und wobei die Säure aus der Gruppe bestehend aus Citronensäure, Ameisensäure, Milchsäure und Amidosulfonsäure ausgewählt ist.

18. Wässrige Reinigungszusammensetzung nach den Ansprüchen 15 bis 17, die einen pH-Wert von 0 bis 7, vorzugsweise 1 bis 4 umfasst.

19. Verwendung der Reinigungszusammensetzungen nach einem der Ansprüche 15 bis 18 zur schmutzabweisenden Behandlung und/oder Reinigung und/oder Oberflächenbehandlung von harten Oberflächen, insbesondere harten Oberflächen von Sanitärkeramik.

20. Verfahren zur Herstellung von Copolymeren durch Copolymerisieren der ethylenisch ungesättigten Monomere:
5 bis 99 Gew.-% eines oder mehrerer anionischer Vinylmonomere (A);
0,01 bis 50 Gew.-% eines oder mehrerer Vinylmonomere (B), die eine quartäre Ammoniumgruppe oder eine tertiäre Aminogruppe umfassen;
gegebenenfalls 0,5 bis 80 Gew.-% eines oder mehrerer nichtionischer hydrophiler Vinylmonomere (C);
0,1 bis 15 Gew.-% eines oder mehrerer polyfunktionaler Vinylmonomere (F) der allgemeinen Formel (IX);
0 bis 30 Gew.-% eines oder mehrerer hydrophober Vinylmonomere (D) und
0 bis 20 Gew.-% eines oder mehrerer Vinylmonomere (E), die Silikoneinheiten enthalten;
wobei die Summe der Monomere (A), (B), (C), (D), (E) und (F) 100 Gew.-% ist, in einem Lösungsmittel, in dem die Monomere (A), (B), (C), (D), (E) und (F) löslich oder dispergierbar sind, in Gegenwart eines Polymerisationsinitiators.

21. Verfahren nach Anspruch 20, wobei die Copolymerisation bei einer Temperatur von 30 bis 110 °C unter einer Inertgasatmosphäre durchgeführt wird.

22. Verfahren nach einem der Ansprüche 20 und 21, wobei das Lösungsmittel Wasser oder ein wässriges Gemisch mit hydrophilen Lösungsmitteln ist.

## Revendications

1. Copolymère constitué par les quantités suivantes de monomères copolymérisés à insaturation éthylénique :
de 5 à 99 % en poids d'un ou de plusieurs monomères vinyliques anioniques (A) ;
de 0,01 à 50 % en poids d'un ou de plusieurs monomères vinyliques (B) comprenant un groupe d'ammonium quaternaire ou un groupe amino tertiaire ;
de manière facultative, de 0,5 à 80 % en poids d'un ou de plusieurs monomères vinyliques hydrophiles non ioniques (C) ;
de 0,1 à 15 % en poids d'un ou de plusieurs monomères vinyliques polyfonctionnels (F) répondant à la formule générale (IX) 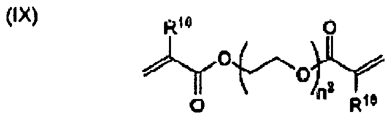
dans laquelle R¹⁸ représente un atome d'hydrogène ou un groupe alkyle contenant 1 ou 2 atomes de carbone et n² représente un nombre de 1 à 20 ;
de 0 à 30 % en poids d'un ou de plusieurs monomères vinyliques hydrophobes (D) ; et
de 0 à 20 % en poids d'un ou de plusieurs monomères vinyliques (E) contenant des fractions de silicone ;
la somme des monomères (A), (B), (C), (D), (E) et (F) représentant 100 % en poids.

2. Copolymère selon la revendication 1, dans lequel le copolymère possède un poids moléculaire moyen en nombre de 10.000 à 1.000.000 g/mol.

3. Copolymère selon l'une quelconque des revendications 1 ou 2, dans lequel le monomère vinylique anionique (A) est choisi parmi le groupe constitué par l'acide acrylique (AA), l'acide méthacrylique (MAA), un monomère répondant à la formule générale (I) 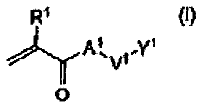 dans laquelle R¹ représente un atome d'hydrogène ou un groupe alkyle contenant 1 ou 2 atomes de carbone ; Y¹ représente un groupe d'acide sulfonique ou un groupe sulfonate ; A¹ représente un atome d'oxygène ou un groupe NH ; et V¹ représente un groupe alkylène linéaire ou ramifié contenant de 1 à 15 atomes de carbone, ou une chaîne hydrocarbonée insaturée contenant de 2 à 15 atomes de carbone ; et un monomère répondant à la formule (II) 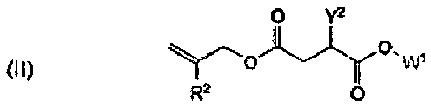 dans laquelle R² représente un atome d'hydrogène ou un groupe alkyle contenant 1 ou 2 atomes de carbone ; Y² représente un groupe d'acide sulfonique ou un groupe sulfonate ; W¹ représente un groupe alkylène linéaire ou ramifié contenant de 1 à 20 atomes de carbone, un groupe alkyle alicyclique ou un groupe alkylène linéaire contenant de 2 à 20 atomes de carbone ou une chaîne alkylène ramifiée ou un groupe alcényle alicyclique ;
ou l'un quelconque de leurs sels de métaux alcalins, de leurs sels d'ammonium, de leurs sels de monoéthanolamine et de leurs sels de triéthylamine.

4. Copolymère selon l'une quelconque des revendications 1 à 3, dans lequel le monomère vinylique anionique (A) est choisi parmi le groupe constitué par l'acide 2-acrylamido-2-méthylpropanesulfonique (AMPS), l'acide méthacrylique (MAA) et l'acide acrylique (AA).

5. Copolymère selon l'une quelconque des revendications 1 à 4, dans lequel le monomère vinylique comprenant un groupe d'ammonium quaternaire ou un groupe amino tertiaire (B) est choisi parmi le groupe constitué par un monomère répondant à la formule générale (III) 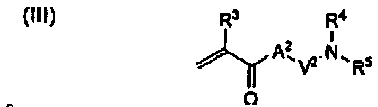 dans laquelle R³ représente un atome d'hydrogène ou un groupe alkyle contenant 1 ou 2 atomes de carbone ; A² représente un atome d'oxygène ou un groupe NH ; V² représente un groupe alkyle linéaire ou un groupe alkylène ramifié contenant de 1 à 15 atomes de carbone ou bien un groupe alcénylène insaturé linéaire ou ramifié contenant de 2 à 15 atomes de carbone ; et R⁴ ou R⁵ représente un groupe alkyle contenant 1 ou 2 atomes de carbone, R⁴ et R⁵ étant identiques ou différents ;
un monomère répondant à la formule générale (IV) 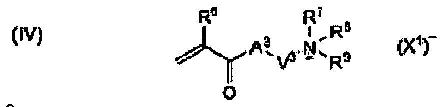 dans laquelle R^{b} représente un atome d'hydrogène ou un groupe alkyle contenant 1 ou 2 atomes de carbone ; A³ représente un atome d'oxygène ou un groupe NH ; V³ représente un groupe alkyle linéaire ou un groupe alkylène ramifié contenant de 1 à 15 atomes de carbone ou bien un groupe alcénylène insaturé linéaire ou ramifié contenant de 2 à 15 atomes de carbone ; X¹ représente un anion antagoniste ; R⁷, R⁸ et R⁹ représentent un groupe alkyle contenant 1 ou 2 atomes de carbone ; et R⁷, R⁸ et R⁹ sont identiques ou différents ;
un monomère répondant à la formule générale (V) 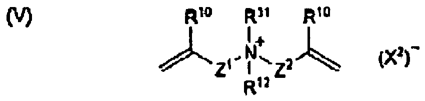 dans laquelle R¹⁰ représente un atome d'hydrogène ou un groupe alkyle contenant 1 ou 2 atomes de carbone ; R¹¹ et R¹² représentent un groupe alkyle contenant 1 ou 2 atomes de carbone ; et R¹¹ et R¹² sont identiques ou différents ; X² représente un anion antagoniste ; et Z¹ et Z² représentent des groupes alkylène linéaires contenant de 1 à 3 atomes de carbone, Z¹ et Z² étant identiques ou différents et les résidus R¹⁰ étant identiques ou différents.

6. Copolymère selon l'une quelconque des revendications 1 à 5, dans lequel le monomère vinylique comprenant un groupe d'ammonium quaternaire ou un groupe amino tertiaire (B) est choisi parmi le groupe constitué par le chlorure de méthacrylamidopropyl triméthylammonium (MAPTAC), le chlorure d'acrylamidopropyl triméthylammonium (AAPTAC), le méthacrylate de diméthylaminoéthyle (DM), le chlorure de méthacryloxy-aminoéthyl triméthylammonium (DMC), le diméthylaminopropyl acrylamide (DMAPAA), le diméthylaminopropyl méthacrylamide (DMAPMAA).

7. Copolymère selon l'une quelconque des revendications 1 à 6, dans lequel le monomère vinylique hydrophile (C) est un monomère répondant à la formule générale (VI) 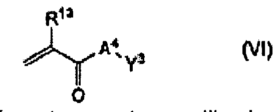 dans laquelle R¹³ représente un atome d'hydrogène ou un groupe alkyle contenant 1 ou 2 atomes de carbone ; A⁴ représente un atome d'oxygène ou un groupe NH ; Y³ représente un groupe [(CH₂)ₘ₁O]ₙ₁B¹ dans lequel B¹ représente un atome d'hydrogène ou un groupe alkyle contenant 1 ou 2 atomes de carbone ; m¹ est égal à 2-4 et n¹ est égal à 1-60 ; et dans lequel, au sein des groupes n¹ [(CH₂)ₘ₁O], la valeur de m¹ est identique ou différente pour chaque groupe.

8. Copolymère selon la revendication 7, dans lequel R¹³ et B¹ représentent un groupe méthyle ; A⁴ représente un atome d'oxygène ; m¹ est égal à 2 ; et n¹ est égal à 9, 23 ou 45.

9. Copolymère selon l'une quelconque des revendications 1 à 8, dans lequel le monomère vinylique hydrophobe (D) représente un monomère répondant à la formule générale (VII) 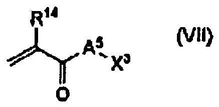 dans laquelle R¹⁴ représente un atome d'hydrogène ou un groupe alkyle contenant 1 ou 2 atomes de carbone ; A⁵ représente un atome d'oxygène ou un groupe NH ; et X³ représente un groupe alkyle linéaire ou ramifié contenant de 1 à 15 atomes de carbone, ou un groupe alcényle linéaire ou ramifié contenant de 1 à 15 atomes de carbone.

10. Copolymère selon l'une quelconque des revendications 1 à 9, dans lequel les monomères vinyliques contenant les fractions de silicone (E) sont des monomères répondant à la formule générale (VIII) 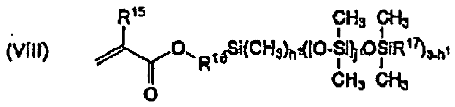 dans laquelle R¹⁵ représente un atome d'hydrogène ou un groupe alkyle contenant 1 ou 2 atomes de carbone ; et R¹⁶ représente un groupe alkyle contenant de 1 à 6, de préférence de 1 à 4 atomes de carbone, contenant un groupe éther ; R¹⁷ représente un groupe alkyle contenant de 1 à 30, de préférence de 1 à 22 atomes de carbone ou bien un groupe alkyle fluoré contenant de 1 à 22 atomes de carbone, et dans laquelle h¹ est égal à 1 ou 2 ; et j¹ est égal à 0-500, de préférence à 0-300.

11. Copolymère selon l'une quelconque des revendications 1 à 10, dans lequel les quantités des monomères copolymérisés à insaturation éthylénique sont les suivantes :
de 30 à 95 % en poids d'un ou de plusieurs monomères vinyliques anioniques (A) ;
de 0,05 à 30 % en poids d'un ou de plusieurs monomères vinyliques (B) comprenant un groupe d'ammonium quaternaire ou un groupe amino tertiaire ; et
de 0,1 à 5 % en poids d'un ou de plusieurs monomères vinyliques polyfonctionnels (F) ;
la somme des monomères (A), (B), (F), et des monomères (C), (D) et (E) présents de manière facultative représentant 100 % en poids.

12. Copolymère selon l'une quelconque des revendications 1 à 11, dans lequel les quantités des monomères copolymérisés à insaturation éthylénique sont les suivantes :
de 35 à 85 % en poids d'un ou de plusieurs monomères vinyliques anioniques (A) ;
de 1 à 9 % en poids d'un ou de plusieurs monomères vinyliques (B) comprenant un groupe d'ammonium quaternaire ou un groupe amino tertiaire ; et
de 0,1 à 2 % en poids d'un ou de plusieurs monomères vinyliques polyfonctionnels (F) ;
la somme des monomères (A), (B), (F), et des monomères (C), (D) et (E) présents de manière facultative représentant 100 % en poids.

13. Copolymère selon l'une quelconque des revendications 1 à 12, dans lequel tous les monomères sont du type à insaturation monoéthylénique.

14. Utilisation de l'un quelconque ou de plusieurs des copolymères selon les revendications 1 à 13 à titre d'agent antisalissure et/ou à titre d'agent de traitement de surface.

15. Composition aqueuse de nettoyage comprenant :
de 0,1 à 10 % en poids d'un ou de plusieurs des copolymères selon les revendications 2 à 8 ;
de 0 à 10 % en poids d'un ou de plusieurs polyéthylèneglycols possédant un poids moléculaire moyen en nombre de 200 à 600.000 g/mol, de préférence de 10.000 à 200.000 g/mol ;
de 0 à 10 % en poids d'un ou de plusieurs agents tensioactifs, de préférence des agents tensioactifs anioniques ou non ioniques ;
de 0 à 10 % en poids d'épaississants ;
de 0 à 80 % en poids de solvants organiques ;
de 0 à 10 % en poids d'un ou de plusieurs agents de complexation ou builders ;
de 0 à 10 % en poids d'un acide inorganique ou organique ;
de 0 à 10 % en poids de fragrances ; et
de 0 à 10 % en poids de colorants.

16. Composition aqueuse de nettoyage selon la revendication 15, comprenant :
de 0,5 à 5 % en poids, de préférence de 1 à 3 % en poids d'un ou de plusieurs des copolymères selon les revendications 2 à 8 ;
de 0,1 à 5 % en poids d'un ou de plusieurs polyéthylèneglycols possédant un poids moléculaire moyen en nombre de 200 à 600.000 g/mol, de préférence de 10.000 à 200.000 g/mol ;
de 0,1 à 3 % en poids d'un ou de plusieurs agents tensioactifs, de préférence des agents tensioactifs anioniques ou non ioniques ;
de 0 à 10 % en poids d'épaississants ;
de 0,1 à 5 % en poids de solvants organiques ;
de 0,1 à 3 % en poids d'un ou de plusieurs agents de complexation ou builders ;
de 0,2 à 5 % en poids d'un acide inorganique ou organique ;
de 0,01 à 1 % en poids de fragrances ; et
de 0,01 à 1 % en poids de colorants.

17. Composition aqueuse de nettoyage selon les revendications 15 et 16, dans laquelle les agents tensioactifs sont choisis parmi le groupe constitué par des polyglycosides d'alkyle, tels que le 1,5-glucoside d'alkyle en C₈-C₁₀, le lauryléthersulfate de sodium et le laurylsulfate de sodium ; dans laquelle le solvant est choisi parmi le groupe constitué par un alcanol, des propylèneglycols, des éthers de glycols et la benzine ; dans laquelle le builder est choisi parmi le groupe constitué par le citrate de sodium, le carbonate de sodium et des phosphonates ; dans laquelle l'épaississant est choisi parmi le groupe constitué par des polysaccharides, des celluloses substituées telles que l'hydroxypropylméthylcellulose, des poly(méth)acrylates, la gomme de guar et des dérivés du xanthane tels que la gomme de xanthane ; et dans laquelle l'acide est choisi parmi le groupe constitué par l'acide citrique, l'acide formique, l'acide lactique et l'acide amidosulfonique.

18. Composition aqueuse de nettoyage selon les revendications 15 à 17, comprenant une valeur de pH de 0 à 7, de préférence de 1 à 4.

19. Utilisation des compositions de nettoyage selon l'une quelconque des revendications 15 à 18, pour l'antisalissure et/ou le nettoyage et/ou le traitement superficiel de surfaces dures, en particulier de surfaces dures d'équipements sanitaires.

20. Procédé de préparation de copolymères par copolymérisation des monomères à insaturation éthylénique, à savoir :
de 5 à 99 % en poids d'un ou de plusieurs monomères vinyliques anioniques (A) ;
de 0,01 à 50 % en poids d'un ou de plusieurs monomères vinyliques (B) comprenant un groupe d'ammonium quaternaire ou un groupe amino tertiaire ;
de manière facultative, de 0,5 à 80 % en poids d'un ou de plusieurs monomères vinyliques hydrophiles non ioniques (C) ;
de 0,1 à 15 % en poids d'un ou de plusieurs monomères vinyliques polyfonctionnels (F) répondant à la formule générale (IX) ;
de 0 à 30 % en poids d'un ou de plusieurs monomères vinyliques hydrophobes (D) ; et
de 0 à 20 % en poids d'un ou de plusieurs monomères vinyliques (E) contenant des fractions de silicone ;
la somme des monomères (A), (B), (C), (D), (E) et (F) représentant 100 % en poids,
dans un solvant dans lequel les monomères (A), (B), (C), (D), (E) et (F) sont solubles ou aptes à être dispersés, en présence d'un initiateur de la polymérisation.

21. Procédé selon la revendication 20, dans lequel la copolymérisation est mise en oeuvre à une température de 30 à 110 °C sous l'atmosphère d'un gaz inerte.

22. Procédé selon l'une quelconque des revendications 20 et 21, dans lequel le solvant est de l'eau ou un mélange aqueux avec des solvants hydrophiles.
